# EUROPEAN PATENT APPLICATION

(11) **EP 4 727 219 A1**
(43) Date of publication of application: **15.04.2026**
(21) Application number: 24838659.1
(22) Date of filing: 03.07.2024
(51) Int. Cl.: H04W 52/02

(54) **COMMUNICATION METHOD, APPARATUS AND SYSTEM**

(30) Priority: 12.07.2023 CN 202310862172
(71) Applicant: Huawei Technologies Co., Ltd., Shenzhen, Guangdong 518129 (CN)
(72) Inventor: KUANG, Yiru, Shenzhen, Guangdong 518129 (CN); XUE, Yifan, Shenzhen, Guangdong 518129 (CN); WANG, Rui, Shenzhen, Guangdong 518129 (CN); XIE, Xi, Shenzhen, Guangdong 518129 (CN)
(74) Representative: Gill Jennings & Every LLP
(86) International application number: PCT/CN2024/103311
(87) International publication number: WO 2025/011404

(57) **Abstract**

This application relates to a communication method, apparatus, and system. A terminal device sends a first message to a first network device, where the first message includes first capability information, the first capability information indicates whether the terminal device supports receiving of a first signal in at least one frequency unit, the terminal device includes a low-power module, and the low-power module is configured to receive the first signal. In embodiments of this application, the terminal device can notify an access network device of a capability that is of the terminal device and that is related to the low-power module, so that the access network device can send a signal like an LP-WUS to the terminal device based on the capability, and the terminal device can operate via the low-power module, to reduce power consumption of the terminal device.

## Description

### CROSS-REFERENCE TO RELATED APPLICATIONS

This application claims priority to Chinese Patent Application No. 202310862172.9, filed with the China National Intellectual Property Administration on July 12, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

A main receiver (main receiver, MR), a main radio (main radio, MR), or a main module is disposed inside a user equipment (user equipment, UE), and is configured to: receive and send a signal. The UE can operate on a 5th generation (5th generation, 5G) new radio (new radio, NR) main link via the MR.

To further reduce power consumption, the UE may further receive a signal by using a radio with low power consumption that is independent of the MR. The radio may be implemented by using a radio or a chip with a simple structure, and has low power consumption. The radio is configured to receive a wake-up signal (wake-up signal, WUS) from a network device. The WUS received by the radio is also referred to as a low-power wake-up signal (low-power wake-up signal, LP-WUS). When detecting the LP-WUS, the UE wakes up the MR that is turned off (or in a sleep state) in the UE.

However, currently, the network device does not learn of a capability that is of the UE and that is related to the radio. Consequently, the network device cannot send the LP-WUS to the UE. As a result, the power consumption of the UE cannot be reduced.

### SUMMARY

Embodiments of this application provide a communication method, apparatus, and system, to reduce power consumption of a terminal device.

According to a first aspect, a first communication method is provided. The method may be performed by a terminal device, may be performed by another device including a function of the terminal device, or may be performed by a chip system (or a chip) or another functional module. The chip system or the functional module can implement the function of the terminal device, and the chip system or the functional module is, for example, disposed in the terminal device. The terminal device may include a low-power module. The method includes: sending a first message to a first network device, where the first message includes first capability information, the first capability information indicates whether the terminal device supports receiving of a first signal in at least one frequency unit, and the low-power module is configured to receive the first signal.

In this embodiment of this application, the terminal device may send the first capability information to the first network device. The first capability information may indicate whether the terminal device the receiving of the first signal in the at least one frequency unit. The first signal is received by the terminal device via the low-power module. That is, the first capability information is a capability that is of the terminal device and that is related to the low-power module. It can be learned that in this embodiment of this application, the terminal device can notify the network device of the capability that is of the terminal device and that is related to the low-power module, so that the network device can send a signal like an LP-WUS to the terminal device based on the capability, and the terminal device can operate via the low-power module, to reduce power consumption of the terminal device. In addition, in hardware implementation, the terminal device may support the first signal only in some frequency units. Therefore, the first capability information may indicate whether the terminal device supports the receiving of the first signal in the at least one frequency unit, so that a granularity of capability reporting is finer. In this way, the network device can perform normal configuration for the terminal device, or the network device can communicate with the terminal device based on the capability of the terminal device.

In an optional implementation, the terminal device further includes a main module, where when the first capability information indicates that the terminal device supports the receiving of the first signal in the at least one frequency unit, the first message further includes second capability information, and the second capability information includes one or more of the following: N1 pieces of bandwidth information or K1 pieces of delay information, where the N1 pieces of bandwidth information indicate a bandwidth of the at least one frequency unit, N1 is a positive integer, the K1 pieces of delay information correspond to the at least one frequency unit, and K1 is a positive integer. Each of the K1 pieces of delay information indicates one or more of the following: time required for the terminal device to switch from the main module to the low-power module; or time required for the terminal device to switch from the low-power module to the main module; or time required for the terminal device to switch between the low-power module and the main module. If the first capability information indicates that the terminal device supports the receiving of the first signal in the at least one frequency unit, the first message may further indicate more capabilities of the terminal device through the second capability information, for example, indicate a bandwidth and/or a delay, so that the first network device is clearer about the capabilities of the terminal device.

In an optional implementation, the first message includes a first container, and the first container is used to carry paging-related information of the terminal device, where the first container includes the first capability information and/or the second capability information; the first capability information is not included in the first container; or the first message further includes the second capability information, and the first capability information and the second capability information are not included in the first container. The first message may include the first container, and the first capability information and/or the second capability information may be included in the first container, or may not be included in the first container. This is flexible.

In an optional implementation, that the first capability information indicates whether the terminal device supports the receiving of the first signal in the at least one frequency unit includes: the first capability information indicates whether the terminal device in an RRC non-connected state supports the receiving of the first signal in the at least one frequency unit; and the second capability information indicates capability information of the terminal device in the RRC non-connected state. The second capability information may be the capability information of the terminal device in the RRC non-connected state, and the first capability information may also be the capability information of the terminal device in the RRC non-connected state; the first capability information may include the capability information of the terminal device in the RRC non-connected state, or may include capability information of the terminal device in an RRC connected state; or the first capability information may be used as the capability information of the terminal device in the RRC non-connected state, or may be used as capability information of the terminal device in an RRC connected state.

In an optional implementation, the terminal device further includes the main module, where when the first capability information indicates that the terminal device supports the receiving of the first signal in the at least one frequency unit, the first message further includes third capability information, and the third capability information includes one or more of the following: N2 pieces of bandwidth information, where the N2 pieces of bandwidth information indicate a bandwidth of the at least one frequency unit, and N2 is a positive integer; K2 pieces of delay information, where the K2 pieces of delay information correspond to the at least one frequency unit, K2 is a positive integer, and each of the K2 pieces of delay information indicates one or more of the following: time required for the terminal device to switch from the main module to the low-power module, time required for the terminal device to switch from the low-power module to the main module, or time required for the terminal device to switch between the low-power module and the main module; time division multiplexing information, where the time division multiplexing information indicates whether the terminal device operates in the main module and the low-power module in a time division manner; or measurement gap information, where the measurement gap information indicates whether the terminal device in the main module needs a measurement gap to perform measurement in the low-power module, and/or whether the terminal device in the low-power module needs a measurement gap to perform measurement in the main module. If the first capability information indicates that the terminal device supports the receiving of the first signal in the at least one frequency unit, the first message may further indicate more capabilities of the terminal device through the third capability information, for example, indicate a bandwidth and/or a delay, so that the first network device is clearer about the capabilities of the terminal device.

In an optional implementation, that the first capability information indicates whether the terminal device supports the receiving of the first signal in the at least one frequency unit includes: the first capability information indicates whether the terminal device in an RRC connected state supports the receiving of the first signal in the at least one frequency unit; and the third capability information indicates capability information of the terminal device in the RRC connected state. The third capability information may be the capability information of the terminal device in the RRC connected state, and the first capability information may also be the capability information of the terminal device in the RRC connected state; the first capability information may include capability information of the terminal device in an RRC non-connected state, or may include the capability information of the terminal device in the RRC connected state; or the first capability information may be used as capability information of the terminal device in an RRC non-connected state, or may be used as the capability information of the terminal device in the RRC connected state.

In an optional implementation, that the first capability information indicates whether the terminal device supports the receiving of the first signal in the at least one frequency unit includes: when a value of the first capability information is a first value, it indicates that the terminal device supports the receiving of the first signal in the at least one frequency unit; or when the first capability information exists, it indicates that the terminal device supports the receiving of the first signal in the at least one frequency unit, where the at least one frequency unit includes all frequency units supported by the terminal device, or includes all frequency units supported by the terminal device within a first frequency range. The first capability information may indicate, by using a value, whether the terminal device supports the receiving of the first signal in the at least one frequency unit, or may indicate, depending on whether the first message includes the first capability information, whether the terminal device supports the receiving of the first signal in the at least one frequency unit. In the two indication manners, the first capability information does not need to occupy too many bits (for example, may occupy one or more bits), so that signaling overheads can be reduced.

In an optional implementation, the first capability information includes first sub-information and second sub-information, and that the first capability information indicates whether the terminal device supports the receiving of the first signal in the at least one frequency unit includes: when a value of the first sub-information is a first value or the first sub-information exists, it indicates that the terminal device supports the receiving of the first signal in all M1 frequency units within a second frequency range; and when a value of the second sub-information is the first value or the second sub-information exists, it indicates that the terminal device supports the receiving of the first signal in all M2 frequency units within a third frequency range, where the at least one frequency unit includes the M1 frequency units and the M2 frequency units, the M1 frequency units include all frequency units supported by the terminal device within the second frequency range, and the M2 frequency units include all frequency units supported by the terminal device within the third frequency range. The first capability information may separately indicate whether the terminal device supports the receiving of the first signal in the M1 frequency units or the M2 frequency units, so that frequency units within different frequency ranges may be separately indicated, and an indication granularity is finer.

In an optional implementation, that the first capability information indicates whether the terminal device supports the receiving of the first signal in the at least one frequency unit includes one or more of the following: the first capability information includes a first list, and the first list includes an identifier of the at least one frequency unit, where the terminal device supports the receiving of the first signal in a frequency unit indicated by an identifier included in the first list; or the first capability information includes at least one piece of first indication information, the at least one piece of first indication information is included in capability information of the at least one frequency unit in the first message, and one piece of first indication information of the at least one piece of first indication information indicates whether the terminal device supports the receiving of the first signal in a frequency unit corresponding to the piece of first indication information. The first capability information may indicate, by including the identifier of the at least one frequency unit or the first indication information, whether the terminal device supports the receiving of the first signal in the at least one frequency unit. In this way, different frequency units may be separately indicated, so that an indication granularity is finer and clearer.

In an optional implementation, the frequency unit includes one or more of the following: a band, a band combination, or a band in a band combination.

In an optional implementation, the frequency unit is a frequency unit in which the main module operates, or a frequency unit in which the low-power module operates. The frequency unit in which the main module operates includes, for example, all or a part of frequency units that are in frequency units configured for the terminal device and that can be used for the main module to operate. All or the part of the frequency units may be currently in an active state or an inactive state; or a part of the frequency units may be in an active state, and the other part of the frequency units may be in an inactive state. The frequency unit in which the low-power module operates includes, for example, all or a part of frequency units that are in frequency units configured for the terminal device and that can be used for the low-power module to operate. All or the part of the frequency units may be currently in an active state or an inactive state; or a part of the frequency units may be in an active state, and the other part of the frequency units may be in an inactive state.

In an optional implementation, the terminal device further includes the main module, and the method further includes: receiving the first signal from the first network device; and receiving a first paging message based on the first signal. The main module may be configured to receive the first paging message. For example, the terminal device may receive the first signal via the low-power module, and the low-power module may wake up the main module of the terminal device, so that the terminal device may receive the first paging message via the main module.

According to a second aspect, a second communication method is provided. The method may be performed by a first network device, may be performed by another device including a function of the first network device, or may be performed by a chip system (or a chip) or another functional module. The chip system or the functional module can implement the function of the first network device, and the chip system or the functional module is, for example, disposed in the first network device. The first network device is, for example, an access network device, and may be referred to as a first access network device. For example, an implementation of the first access network device is a base station. The method includes: receiving a first message from a terminal device, where the first message includes first capability information, the first capability information indicates whether the terminal device supports receiving of a first signal in at least one frequency unit, the terminal device includes a low-power module, and the low-power module is configured to receive the first signal.

In an optional implementation, the terminal device further includes a main module, where when the first capability information indicates that the terminal device supports receiving of the first signal in the at least one frequency unit, the first message further includes second capability information, and the second capability information includes N1 pieces of bandwidth information and/or K1 pieces of delay information, where the N1 pieces of bandwidth information indicate a bandwidth of the at least one frequency unit, N1 is a positive integer, the K1 pieces of delay information correspond to the at least one frequency unit, and K1 is a positive integer. Each delay in the K1 pieces of delay information indicates one or more of the following: time required for the terminal device to switch from the main module to the low-power module; or time required for the terminal device to switch from the low-power module to the main module; or time required for the terminal device to switch between the low-power module and the main module.

In an optional implementation, the first message includes a first container, and the first container is used to carry paging-related information of the terminal device, where the first container includes the first capability information and/or the second capability information; the first capability information is not included in the first container; or the first message further includes the second capability information, and the first capability information and the second capability information are not included in the first container.

In an optional implementation, that the first capability information indicates whether the terminal device supports the receiving of the first signal in the at least one frequency unit includes: the first capability information indicates whether the terminal device in an RRC non-connected state supports the receiving of the first signal in the at least one frequency unit; and the second capability information indicates capability information of the terminal device in the RRC non-connected state.

In an optional implementation, the first network device is a first access network device, and the method further includes: sending a second message to a core network device, where the second message includes fourth capability information of the terminal device, where when the first container includes the first capability information and/or the second capability information, the second message includes the first container, and the fourth capability information includes the first capability information and/or the second capability information in the first container; or when the first capability information is not included in the first container, the fourth capability information is determined based on the first capability information; or when the first capability information and the second capability information are not included in the first container, the fourth capability information is determined based on the first capability information and the second capability information. If the first container includes the first capability information and/or the second capability information, the first network device may directly send the first container to the core network device, and the first network device does not need to perform excessive processing processes. This can simplify implementation of the first network device. Alternatively, if the first container does not include the first capability information or the second capability information, the first network device may obtain the fourth capability information based on the first capability information and/or the second capability information in the first message, and then send the fourth capability information to the core network device.

In an optional implementation, the method further includes: receiving a third message from the core network device, where the third message includes the fourth capability information; sending the first signal, where the first signal is a wake-up signal determined based on the fourth capability information; and sending a first paging message for paging the terminal device. In a core network paging process, the third message is, for example, a paging message from the core network device. In a RAN paging process, the third message may be used to send the capability information of the terminal device to the first network device. The first network device may determine, based on the fourth capability information, whether the terminal device supports the receiving of the first signal in the at least one frequency unit, determine whether the terminal device supports the receiving of the first signal, or determine a specific paging manner or wake-up manner that is to be used for the terminal device. For example, if the terminal device supports the receiving of the first signal in the at least one frequency unit, the terminal device supports the receiving of the first signal, or the terminal device is to be woken up by using the first signal, the first network device may send the first signal.

In an optional implementation, the method further includes: sending a fourth message to at least one network device (for example, at least one access network device), where the fourth message includes the fourth capability information. If a to-be-paged terminal device is not within coverage of the first network device, the first network device may send the fourth message to at least one other network device, so that the at least one network device can page the terminal device. In addition, the fourth message may include the fourth capability information, so that the network device that receives the fourth message can determine a specific paging manner or wake-up manner that is to be used for the terminal device, determine whether the terminal device supports the receiving of the first signal in the at least one frequency unit, or determine whether the terminal device supports the receiving of the first signal.

In an optional implementation, the first network device includes a central unit and a distributed unit, and the method further includes: The central unit sends second indication information to the distributed unit, where the second indication information indicates whether the terminal device supports the receiving of the first signal. The central unit sends second indication information to the distributed unit, where the second indication information indicates whether the terminal device supports the receiving of the first signal in the at least one frequency unit. If the first network device includes the central unit and the distributed unit, the fourth capability information received from the core network device may be the central unit of the first network device, or a module that can determine whether the terminal device supports the receiving of the first signal in the at least one frequency unit (or determine whether the terminal device supports the receiving of the first signal, or determine a specific paging manner or wake-up manner that is to be used for the terminal device) is the central unit, and the distributed unit is configured to page the terminal device. Therefore, the distributed unit is to be able to determine whether the terminal device supports the receiving of the first signal in the at least one frequency unit (or determine whether the terminal device supports the receiving of the first signal, or determine a specific paging manner or wake-up manner that is to be used for the terminal device). Therefore, the central unit may send the second indication information to the distributed unit, so that the distributed unit can determine whether the terminal device supports the receiving of the first signal in the at least one frequency unit (or determine whether the terminal device supports the receiving of the first signal, or determine a specific paging manner or wake-up manner that is to be used for the terminal device).

In an optional implementation, that the second indication information indicates whether the terminal device supports the receiving of the first signal in the at least one frequency unit includes: the second indication information includes the fourth capability information. If the central unit may directly send the fourth capability information to the distributed unit, the central unit does not need to perform excessive processing processes. This can simplify implementation of the central unit.

In an optional implementation, the second indication information is included in a second paging message, where the second paging message includes a UE paging capability field corresponding to the terminal device, and the second indication information is included in the UE paging capability field; or the second paging message includes a paging message list, the paging message list includes information about a first cell on which the terminal device camps, and the second indication information is included in the information about the first cell. In addition, the second indication information may alternatively be included in another field of the second paging message. For example, the second indication information may be included in a new field of the second paging message. This is not limited.

In an optional implementation, the terminal device further includes the main module, where when the first capability information indicates that the terminal device supports the receiving of the first signal in the at least one frequency unit, the first message further includes third capability information, and the third capability information includes one or more of the following: N2 pieces of bandwidth information, where the N2 pieces of bandwidth information indicate a bandwidth of the at least one frequency unit, and N2 is a positive integer; K2 pieces of delay information, where the K2 pieces of delay information correspond to the at least one frequency unit, K2 is a positive integer, and each of the K2 pieces of delay information indicates one or more of the following: time required for the terminal device to switch from the main module to the low-power module, time required for the terminal device to switch from the low-power module to the main module, or time required for the terminal device to switch between the low-power module and the main module; time division multiplexing information, where the time division multiplexing information indicates whether the terminal device operates in the main module and the low-power module in a time division manner; or measurement gap information, where the measurement gap information indicates whether the terminal device in the main module needs a measurement gap to perform measurement in the low-power module, and/or whether the terminal device in the low-power module needs a measurement gap to perform measurement in the main module.

In an optional implementation, that the first capability information indicates whether the terminal device supports the receiving of the first signal in the at least one frequency unit includes: the first capability information indicates whether the terminal device in an RRC connected state supports the receiving of the first signal in the at least one frequency unit; and the third capability information indicates capability information of the terminal device in the RRC connected state.

In an optional implementation, that the first capability information indicates whether the terminal device supports the receiving of the first signal in the at least one frequency unit includes: when a value of the first capability information is a first value, it indicates that the terminal device supports the receiving of the first signal in the at least one frequency unit; or when the first capability information exists, it indicates that the terminal device supports the receiving of the first signal in the at least one frequency unit, where the at least one frequency unit includes all frequency units supported by the terminal device, or includes all frequency units supported by the terminal device within a first frequency range.

In an optional implementation, the second capability information includes first sub-information and second sub-information, and that the first capability information indicates whether the terminal device supports the receiving of the first signal in the at least one frequency unit includes: when a value of the first sub-information is a first value or the first sub-information exists, it indicates that the terminal device supports the receiving of the first signal in all M1 frequency units within a second frequency range; and when a value of the second sub-information is the first value or the second sub-information exists, it indicates that the terminal device supports the receiving of the first signal in all M2 frequency units within a third frequency range, where the at least one frequency unit includes the M1 frequency units and the M2 frequency units, the M1 frequency units include all frequency units supported by the terminal device within the second frequency range, and the M2 frequency units include all frequency units supported by the terminal device within the third frequency range.

In an optional implementation, that the first capability information indicates whether the terminal device supports the receiving of the first signal in the at least one frequency unit includes one or more of the following: the first capability information includes a first list, and the first list includes an identifier of the at least one frequency unit, where the terminal device supports the receiving of the first signal in a frequency unit indicated by an identifier included in the first list; or the first capability information includes at least one piece of first indication information, the at least one piece of first indication information is included in capability information of the at least one frequency unit in the first message, and one piece of first indication information of the at least one piece of first indication information indicates whether the terminal device supports the receiving of the first signal in a frequency unit corresponding to the piece of first indication information.

In an optional implementation, the frequency unit includes one or more of the following: a band, a band combination, or a band in a band combination.

In an optional implementation, the frequency unit is a frequency unit in which the main module operates, or a frequency unit in which the low-power module operates.

For technical effects achieved by some optional implementations of the second aspect, refer to the descriptions of the technical effects of the first aspect or the corresponding implementations.

According to a third aspect, a third communication method is provided. The method may be performed by a core network device, may be performed by another device including a function of the core network device, or may be performed by a chip system (or a chip) or another functional module. The chip system or the functional module can implement the function of the core network device, and the chip system or the functional module is, for example, disposed in the core network device. An implementation of the core network device is, for example, an AMF, or may be another core network device, for example, a UPF. The method includes: receiving a second message from a first network device (for example, a first access network device), where the second message includes fourth capability information of a terminal device, the fourth capability information indicates whether the terminal device supports receiving of a first signal in at least one frequency unit, the terminal device includes a low-power module, and the low-power module is configured to receive the first signal.

In an optional implementation, the second message includes a first container, and the fourth capability information includes first capability information and/or second capability information in the first container; or in the second message, the fourth capability information is not included in the first container, and the fourth capability information is determined based on first capability information, or is determined based on the first capability information and second capability information. The first capability information indicates whether the terminal device supports the receiving of the first signal in the at least one frequency unit, and the second capability information is capability information of the terminal device in an RRC non-connected state.

In an optional implementation, the terminal device further includes a main module, where when the first capability information indicates that the terminal device supports the receiving of the first signal in the at least one frequency unit, the second capability information includes: N1 pieces of bandwidth information, where the N1 pieces of bandwidth information indicate a bandwidth of the at least one frequency unit, and N1 is a positive integer; and/or K1 pieces of delay information, where the K1 pieces of delay information correspond to the at least one frequency unit, K1 is a positive integer, and each of the K1 pieces of delay information indicates one or more of the following: time required for the terminal device to switch from the main module to the low-power module; or time required for the terminal device to switch from the low-power module to the main module; or time required for the terminal device to switch between the low-power module and the main module.

In an optional implementation, the method further includes: sending a third message to the first network device, where the third message includes the fourth capability information.

For technical effects achieved by the third aspect or the optional implementations, refer to the descriptions of the technical effects achieved by the first aspect or the corresponding implementations, and/or refer to the descriptions of the technical effects achieved by the second aspect or the corresponding implementations.

According to a fourth aspect, a communication apparatus is provided. The communication apparatus may be the terminal device according to any one of the first aspect to the third aspect. The communication apparatus has a function of the terminal device. The communication apparatus is, for example, the terminal device, a large device including the terminal device, or a functional module in the terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function; or the sending unit and the receiving unit may be different functional modules, and the transceiver unit is a general term for these functional modules.

In an optional implementation, the transceiver unit (or the sending unit) is configured to send a first message to a first network device, where the first message includes first capability information, the first capability information indicates whether the terminal device supports receiving of a first signal in at least one frequency unit, and the low-power module is configured to receive the first signal.

In an optional implementation, the communication apparatus further includes a storage unit (sometimes also referred to as a storage module). The processing unit is configured to: be coupled to the storage unit, and execute a program or instructions in the storage unit, to cause the communication apparatus to perform the function of the terminal device according to any one of the first aspect to the third aspect.

According to a fifth aspect, a communication apparatus is provided. The communication apparatus may be the first network device according to any one of the first aspect to the third aspect. The communication apparatus has a function of the first network device. The communication apparatus is, for example, the first network device, a large device including the first network device, or a functional module in the first network device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the fourth aspect.

In an optional implementation, the transceiver unit (or the receiving unit) is configured to receive a first message from a terminal device, where the first message includes first capability information, the first capability information indicates whether the terminal device supports receiving of a first signal in at least one frequency unit, the terminal device includes a low-power module, and the low-power module is configured to receive the first signal.

In an optional implementation, the communication apparatus further includes a storage unit (sometimes also referred to as a storage module). The processing unit is configured to: be coupled to the storage unit, and execute a program or instructions in the storage unit, to cause the communication apparatus to perform the function of the first network device according to any one of the first aspect to the third aspect.

According to a sixth aspect, a communication apparatus is provided. The communication apparatus may be the core network device according to any one of the first aspect to the third aspect. The communication apparatus has a function of the core network device. The communication apparatus is, for example, the core network device, a large device including the core network device, or a functional module in the core network device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the fourth aspect.

In an optional implementation, the transceiver unit (or the receiving unit) is configured to receive a second message from a first network device, where the second message includes fourth capability information of a terminal device, the fourth capability information indicates whether the terminal device supports receiving of a first signal in at least one frequency unit, the terminal device includes a low-power module, and the low-power module is configured to receive the first signal.

In an optional implementation, the communication apparatus further includes a storage unit (sometimes also referred to as a storage module). The processing unit is configured to: be coupled to the storage unit, and execute a program or instructions in the storage unit, to cause the communication apparatus to perform the function of the core network device according to any one of the first aspect to the third aspect.

According to a seventh aspect, a communication apparatus is provided. The communication apparatus may be a terminal device, or a chip or a chip system used in the terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the terminal device in the foregoing aspects.

According to an eighth aspect, a communication apparatus is provided. The communication apparatus may be a first network device, or a chip or a chip system used in the first network device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the first network device in the foregoing aspects.

According to a ninth aspect, a communication apparatus is provided. The communication apparatus may be a core network device, or a chip or a chip system used in the core network device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the core network device in the foregoing aspects.

According to a tenth aspect, a communication system is provided, including a terminal device and a first network device. The terminal device is configured to perform the method performed by the terminal device in the foregoing aspects, and the first network device is configured to perform the method performed by the first network device in the foregoing aspects. For example, the terminal device may be implemented by using the communication apparatus according to the fourth aspect or the seventh aspect; and the first network device may be implemented by using the communication apparatus according to the fifth aspect or the eighth aspect.

In an optional implementation, the communication system may further include a core network device. The core network device is configured to perform the method performed by the core network device in the foregoing aspects. For example, the core network device may be implemented by using the communication apparatus according to the sixth aspect or the ninth aspect.

According to an eleventh aspect, a computer-readable storage medium is provided. The computer-readable storage medium is configured to store a computer program or instructions. When the computer program or the instructions are run, the method performed by the terminal device, the first network device, or the core network device in the foregoing aspects is implemented.

According to a twelfth aspect, a computer program product including instructions is provided. When the computer program product runs on a computer, the methods in the foregoing aspects are implemented.

According to a thirteenth aspect, a chip system is provided, including a processor and an interface. The processor is configured to: invoke instructions from the interface and run the instructions, to cause the chip system to implement the methods in the foregoing aspects.

### BRIEF DESCRIPTION OF DRAWINGS

FIG. 1 is a diagram of operation manners of a low-power radio and an MR;
FIG. 2 is a diagram of a communication network architecture to which an embodiment of this application is applicable;
FIG. 3 and FIG. 4 are flowcharts of two communication methods according to embodiments of this application;
FIG. 5 is a diagram of an apparatus according to an embodiment of this application; and
FIG. 6 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" in embodiments of this application are intended to distinguish between a plurality of objects, and are not intended to limit sizes, content, a sequence, a time sequence, priorities, importance degrees, or the like of the plurality of objects. For example, first capability information and second capability information may be same capability information, or may be different capability information. In addition, this name does not indicate that the two pieces of capability information are different in a transmit end/receive end, content, sizes, application scenarios, priorities, importance degrees, or the like. In addition, step numbers in embodiments described in this application are merely intended to distinguish between different steps, but are not intended to limit a sequence of the steps. For example, S301 may be performed before S302, or may be performed after S302, or may be performed simultaneously with S302.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to terminal devices in the following scenarios: a sensing scenario, cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), a remote medical (remote medical), a smart grid (smart grid), smart furniture, a smart office, a smart wearable, smart transportation, a smart city (smart city), an uncrewed aerial vehicle, and a robot. The terminal device may be sometimes referred to as a UE, a terminal, an access station, a UE station, a remote station, a wireless communication device, a user apparatus, or the like.

In embodiments of this application, a communication apparatus configured to implement a function of the terminal device may be a terminal device, or may be an apparatus, for example, a chip system, that can support the terminal device in implementing the function. The apparatus may be mounted in the terminal device. In the technical solutions provided in embodiments of this application, an example in which the apparatus configured to implement the function of the terminal device is the terminal device is used to describe the technical solutions provided in embodiments of this application. In addition, for ease of description, in embodiments of this application, an example in which the terminal device is the UE is used for description.

The network device in embodiments of this application includes, for example, an access network device and/or a core network device. The access network device is a device with a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next-generation NodeB (next generation NodeB, gNodeB)/gNB), a transmission reception point (transmission reception point, TRP), a subsequent evolved base station in a 3rd generation partnership project (3rd generation partnership project, 3GPP), and an access node, a wireless relay node, a wireless backhaul node, or the like in a wireless fidelity (wireless fidelity, Wi-Fi) system. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. The access network device may alternatively be a server or the like. For example, a network device in a V2X technology may be a road side unit (road side unit, RSU). The following provides descriptions by using an example in which the access network device is the base station. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems using different access technologies may be different. This is not limited in embodiments of this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In a CU-DU architecture, a 5G NR base station (gNB) is reconstructed into two logical network elements: a base station-central unit (gNB-central unit, gNB-CU) and a base station-distributed unit (gNB-distributed unit, gNB-DU). The two logical network elements may be deployed together or separately deployed based on a scenario and a requirement. The following network architecture is briefly referred to as a CU-DU split architecture. The gNB-CU and the gNB-DU are two functional entities, and functions are divided based on real-time performance of to-be-processed content. For example, the gNB-CU includes an RRC layer, a service data adaptation protocol (service data adaptation protocol, SDAP) layer, and a packet data convergence protocol (packet data convergence protocol, PDCP) layer in a gNB protocol stack. That is, the gNB-CU has functions of protocol layers such as the RRC layer, the SDAP layer, and the PDCP layer. The gNB-DU includes a radio link control (radio link control, RLC) layer, a medium access control (medium access control, MAC) layer, and a physical (physical, PHY) layer in a gNB protocol stack. That is, the gNB-DU has functions of protocol layers such as the RLC layer, the MAC layer, and the PHY layer. Main functions of the RRC layer are a higher layer control plane of the UE, and are related to access control, maintenance, and release of the UE, configuration of the UE, and the like. The RRC layer can parse an RRC message. Main functions of the MAC layer and the PHY layer are low-layer scheduling of the UE, and are related to data packet assembly, data scheduling, and the like of the UE. The MAC layer can parse control signaling of the MAC layer. The PHY layer can parse control signaling of the PHY layer.

In embodiments of this application, a communication apparatus configured to implement a function of the network device may be a network device, or may be an apparatus, for example, a chip system, that can support the network device in implementing the function. The apparatus may be mounted in the network device. In the technical solutions provided in embodiments of this application, an example in which the apparatus configured to implement the function of the network device is the network device is used to describe the technical solutions provided in embodiments of this application.

When being in a radio resource control (radio resource control, RRC) idle (idle) state or an RRC inactive (inactive) state, the UE obtains a location of a paging frame (paging frame, PF) and a location of a paging occasion (paging occasion, PO) in a PF through calculation based on a UE identity (ID) of the UE, to receive paging in the PO. Regardless of whether the UE performs the foregoing paging receiving procedure in the RRC idle state or the RRC inactive state, or performs data receiving in an RRC connected (connected) state, a same receiving module is used. In embodiments of this application, a receiver configured to complete these functions (or perform related steps) is referred to as a main receiver (main receiver, MR), a main radio (main radio, MR), or a main module, that the UE operates in the main receiver, the main radio, or the main module may mean: The UE operates on a 5G NR main link. A process in which the UE receives a signal by using the main receiver, the main radio, or the main module may be referred to as a process in which the signal is transmitted on a link (for example, referred to as an NR main link, where a name is not limited in this application). The NR main link represents a connection relationship between the UE and the network device, and is a logical concept rather than a physical entity.

To further reduce power consumption, the UE may further receive a signal by using a radio independent of the MR, for example, referred to as a radio A. The radio A may be implemented by using a radio or a chip with a simple structure, and has low power consumption. The radio A is configured to receive a WUS from the network device. The WUS received via the radio A is also referred to as an LP-WUS. When detecting the LP-WUS, the UE wakes up an MR that is turned off (or in a sleep state) in the UE. The radio A may be referred to as a wake-up radio (wake-up radio, WUR), a wake-up receiver (wake-up receiver, WUR), a wake-up module, a low-power radio (lower-power radio, LR), a low-power receiver (lower-power receiver, LR), a low-power module, or a low-power wake-up module. That the UE receives a wake-up signal by using the radio A may be referred to as that the UE operates on a WUR/LR link, or the WUR/LR is in an operating state. A process in which the UE receives a signal by using the radio A may be referred to as a process in which the signal is transmitted on a link (for example, referred to as a WUR/LR main link, where a name is not limited in embodiments of this application). The WUR/LR main link represents a connection relationship between the UE and the network device, and is a logical concept rather than a physical entity.

The wake-up signal may be used to wake up at least one UE or at least one UE group. As an example, the wake-up signal includes wake-up information, and the wake-up information is information related to waking up the UE. For example, the wake-up information is paging-related information. The wake-up information may be used by the UE to determine whether to perform the paging receiving procedure; or the wake-up information may be used by the UE to determine whether to initiate the random access. As an example, the wake-up information includes information (such as a UE ID) about one or more UEs that need to be woken up. The one or more UEs may belong to at least one UE group (UE group). Correspondingly, the wake-up information may include a group identifier of the UE group. When the access network device sends the LP-WUS to the UE, to reduce power consumption of the radio A, some simple modulation methods such as on off keying (on off keying, OOK) or Manchester OOK may be used for the LP-WUS signal. Correspondingly, the radio A in the UE may receive the LP-WUS in an envelope detection manner.

For example, when being powered on, the UE may first search the MR for a signal on the NR main link. If the signal on the NR main link can be found, the UE may camp on the NR main link. If the signal on the NR main link indicates configuration information of an LP-WUS, the UE may further search the radio A for the LP-WUS based on the configuration information of the LP-WUS. If the LP-WUS can be found, and signal quality of the LP-WUS is good, the UE can operate in the radio A. Alternatively, when being powered on, the UE may first search the MR for a signal on the NR main link. If the signal on the NR main link cannot be found, the UE may search for an LP-WUS based on configuration information preset in the UE. If the LP-WUS can be found and signal quality of the LP-WUS is good, the UE can operate in the radio A.

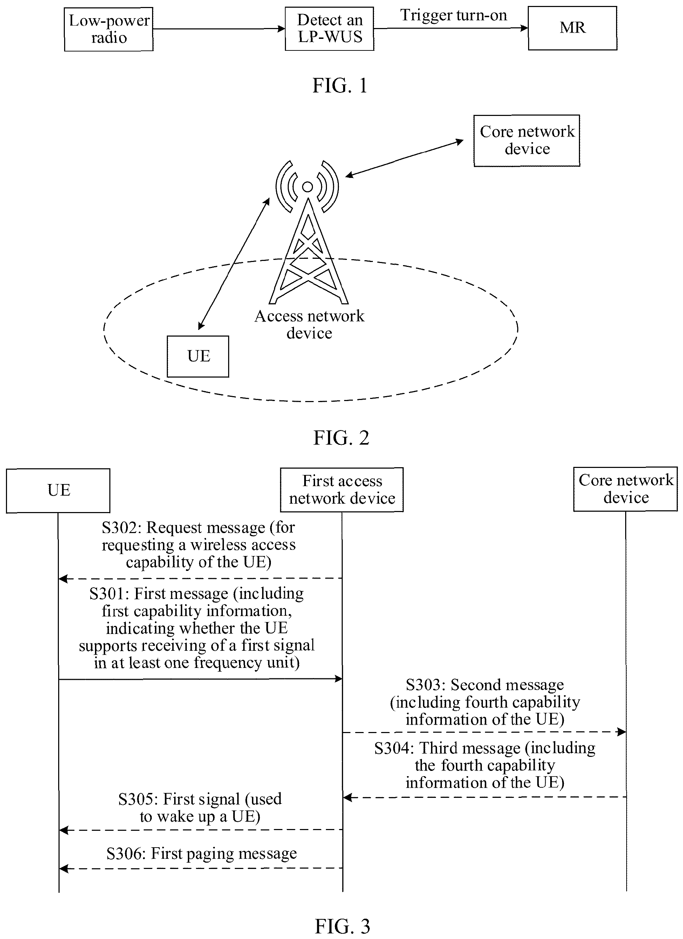

FIG. 1 is a diagram of operation manners of a radio A and an MR. In FIG. 1, an example in which the radio A is a low-power radio is used. After operating in the low-power radio, if detecting an LP-WUS, a UE may trigger the MR turn-on, to receive paging, initiate random access, or the like. However, if the UE does not detect the LP-WUS, the UE does not need to trigger the MR turn-on, and the MR may continue to be turned off (or continue to be in a sleep state). Therefore, operation time of the MR can be reduced, to reduce power consumption of the UE.

However, currently, a base station does not learn of a capability that is of the UE and that is related to the low-power radio. Consequently, the base station cannot send the LP-WUS to the UE. As a result, the power consumption of the UE cannot be reduced.

In view of this, the UE in this embodiment of this application may send first capability information to a first network device. The first capability information may indicate whether the UE supports receiving of a first signal in at least one frequency unit. The first signal is received by the UE via a low-power module. That is, the first capability information is a capability that is of the UE and that is related to the low-power module. It can be learned that in this embodiment of this application, the UE can notify the network device of the capability that is of the UE and that is related to the low-power module, so that the network device can send a signal like an LP-WUS to the UE based on the capability, and the UE can operate via the low-power module, to reduce power consumption of the UE. In addition, in hardware implementation, the UE may support the first signal only in some frequency units. Therefore, the first capability information may indicate whether the UE supports the receiving of the first signal in the at least one frequency unit, so that a granularity of capability reporting is finer. In this way, the network device can perform normal configuration for the UE, or the network device can communicate with the terminal device based on the capability of the UE.

The technical solutions provided in embodiments of this application may be applied to a 4th generation (4th generation, 4G) mobile communication technology system, for example, a long term evolution (long term evolution, LTE) system, may be applied to a 5G system, for example, a new radio (new radio, NR) system, or may be applied to a next-generation mobile communication system or another similar communication system, for example, a 6th generation (6th generation, 6G) mobile communication technology system. This is not specifically limited. In addition, the technical solutions provided in embodiments of this application may be applied to a device-to-device D2D scenario, for example, an NR-D2D scenario, or may be applied to a V2X scenario, for example, an NR-V2X scenario. For example, the technical solutions may be applied to fields such as factory manufacturing, whole-house intelligence, intelligent driving, assisted driving, or intelligent connected vehicles.

FIG. 2 is a communication network architecture to which an embodiment of this application is applicable. A UE, an access network device, and a core network device are included in FIG. 2. The UE may be located within coverage of the access network device, or may be located outside the coverage of the access network device. In FIG. 2, an example in which the UE is located within the coverage of the access network device is used. The access network device is, for example, a base station. The core network device is, for example, an AMF or another device. The access network device is, for example, of an overall architecture, or may be of a distributed architecture, for example, including a gNB-CU and a gNB-DU. This is not limited.

To better describe embodiments of this application, the following describes, with reference to the accompanying drawings, methods provided in embodiments of this application. In embodiments of this application, a frequency unit is, for example, a band (band), a band combination (band combination, BC), a band in a band combination, a carrier in a band in a band combination, a subcarrier (subcarrier), a bandwidth part (bandwidth part, BWP), or a resource block (resource block, RB) set (set). The frequency unit is, for example, a frequency unit corresponding to an NR system, namely, an NR frequency unit. In embodiments of this application, an MR and a low-power module may be disposed in the UE. The low-power module may also be referred to as a low-power unit, and may be implemented by using software and/or hardware. The low-power module includes, for example, a wake-up radio (wake-up radio, WUR), a wake-up receiver (wake-up receiver, WUR), a wake-up module, a low-power radio (lower-power radio, LR), a low-power receiver (lower-power receiver, LR), or a low-power wake-up module. The following describes the solutions provided in embodiments of this application by using an example in which the low-power module is the low-power radio.

Unless otherwise specified below, in the accompanying drawings corresponding to embodiments of this application, steps represented by dashed lines are all optional steps. The methods provided in embodiments of this application may be applied to the network architecture shown in FIG. 2. For example, the UE in embodiments of this application may be the UE in FIG. 2. The first network device in embodiments of this application may include a core network device and/or an access network device. In the following description process, an example in which the first network device includes the first access network device is used. That is, the "first access network device" below may also be replaced with the "first network device". The first access network device may be the access network device in FIG. 2. The core network device in embodiments of this application may be the core network device in FIG. 2.

An embodiment of this application provides a communication method. FIG. 3 is a flowchart of the method.

S301: A UE sends a first message to a first access network device. Correspondingly, the first access network device receives the first message from the UE. Optionally, the UE may send the first message to the first access network device when the UE is in an RRC connected state, and the first access network device is, for example, a serving access network device of the UE.

The first message may include first capability information, and the first capability information may indicate whether the UE supports receiving of a first signal in at least one frequency unit. The UE may receive the first signal via a low-power radio. For example, the first signal is an LP-WUS, or may be another signal that can be received via the low-power radio. Whether the UE supports the receiving of the first signal in the at least one frequency unit may also be understood as whether the low-power radio of the UE can operate, or may be understood as whether the UE supports the low-power radio. The information indicating that the UE supports the receiving of the first signal in the frequency unit may implicitly indicate that the UE supports the receiving of the first signal (or the UE supports the low-power radio, or the low-power radio of the UE can operate). That is, the first capability information indicates whether the UE supports the receiving of the first signal in the at least one frequency unit, to implicitly indicate whether the UE supports the receiving of the first signal. If the UE does not support the receiving of the first signal in any frequency unit, the UE does not support the receiving of the first signal. If the UE supports the receiving of the first signal, the UE is to support the receiving of the first signal at least in one frequency unit.

The at least one frequency unit may be all or a part of frequency units configured for the UE, a part or all of frequency units supported by the UE, or a part or all of frequency units in which the UE can operate. Any one of the at least one frequency unit may be currently activated or not activated. In hardware implementation, the UE may support the receiving of the first signal in some frequency units. Therefore, the first capability information may indicate whether the UE supports the receiving of the first signal in the at least one frequency unit, so that a granularity of capability reporting is finer. In this way, the access network device can perform normal configuration for the UE, or the access network device can communicate with the terminal device based on a capability of the UE. For example, the at least one frequency unit includes all or the part of frequency units supported by the UE; or the at least one frequency unit includes all or a part of frequency units supported by the UE within a first frequency range, and the first frequency range is, for example, a frequency range (frequency range, FR) 1 (including a band less than or equal to a 6 GHz band), an FR 2 (including a band greater than the 6 GHz band), or an FR 1 and an FR 2.

Optionally, the first capability information is capability information of the UE in the RRC connected state.

Optionally, the first capability information is capability information of the UE in an RRC non-connected state, for example, paging-related capability information. In embodiments of this application, the RRC non-connected state includes, for example, an RRC idle state and/or an RRC inactive state.

Optionally, the first capability information may be capability information of the UE in the RRC connected state, and may be capability information of the UE in an RRC non-connected state. That is, regardless of whether the UE is in the RRC connected state or the RRC non-connected state, the first capability information may be applied. The first capability information may indicate whether the UE in the RRC connected state supports the receiving of the first signal in the at least one frequency unit, or may indicate whether the UE in the RRC non-connected state supports the receiving of the first signal in the at least one frequency unit.

Alternatively, the first message includes first capability information A and first capability information B. The first capability information A may be capability information of the UE in the RRC connected state, and the first capability information B may be capability information of the UE in the RRC non-connected state. To be specific, when the UE is in the RRC connected state, the first capability information A is applied, and the first capability information A may indicate whether the UE in the RRC connected state supports the receiving of the first signal in the at least one frequency unit; or when the UE is in the RRC non-connected state, the first capability information B is applied, and the first capability information B may indicate whether the UE in the RRC non-connected state supports the receiving of the first signal in the at least one frequency unit.

The first capability information indicates whether the UE supports the receiving of the first signal in the at least one frequency unit. There are a plurality of indication manners of the first capability information. The following uses examples for description. Regardless of whether the first capability information is applicable to the UE in the RRC non-connected state or the RRC connected state, these indication manners are applicable. Therefore, the following uses an example in which the first capability information indicates whether the UE supports the receiving of the first signal in the at least one frequency unit, and the RRC states of the UE are not distinguished.

I. A dedicated frequency unit for the low-power radio is not disposed for the UE. In this case, in any one of the at least one frequency unit, the UE can operate in an MR, or can operate in the low-power radio, or it is considered that the first signal is deployed in a downlink frequency resource of a frequency unit supported by the UE.

1. Assumption 1: If supporting the receiving of the first signal, the UE is to support the receiving of the first signal in any frequency unit supported by the UE, or is to support, in any frequency unit supported by the UE, the receiving of the first signal within the frequency unit. An example in which the frequency unit is a band is used. If supporting the receiving of the first signal, the UE is to support the receiving of the first signal in any band supported by the UE, or the UE is to support, in any band supported by the UE, the receiving of the first signal within the band (intra-band). Any frequency unit supported by the UE may be any frequency unit within a specific frequency range supported by the UE, or any frequency unit within all frequency ranges supported by the UE. For example, the UE supports three frequency units: frequency units 1, 2, and 3. If supporting the receiving of the first signal, the UE is to support the receiving of the first signal in all the three frequency units, that is, support the receiving of the first signal in any frequency unit in the three frequency units; or if the UE does not support the receiving of the first signal in any one of the three frequency units, it is considered that the UE does not support the receiving of the first signal. The three frequency units may be all frequency units within a specific frequency range supported by the UE, or all frequency units within all frequency ranges supported by the UE.

Optionally, the first capability information may alternatively indicate the at least one frequency unit. For example, the first capability information includes an identifier of the at least one frequency unit; or the UE may indicate the at least one frequency unit to a first network device through another information; or the frequency unit supported by the UE may be configured by a first network device, so that the first network device can determine specific frequency units included in the at least one frequency unit, without the indication of the UE.

In this assumption, the first capability information indicates whether the UE supports the receiving of the first signal in the at least one frequency unit. In an optional indication manner, if a value of the first capability information is a first value, it indicates that the UE supports the receiving of the first signal in the at least one frequency unit, or it indicates that the UE supports the receiving of the first signal in any frequency unit in the at least one frequency unit; or if a value of the first capability information is a second value or is not a first value, it indicates that the UE does not support the receiving of the first signal in the at least one frequency unit, or it indicates that the UE does not support the receiving of the first signal. For example, the first capability information is an indication field occupying 1 bit (bit). If a value of the indication field is the first value, it indicates "supported"; or if a value of the indication field is the second value, it indicates "not supported". For example, the first value is "1", and the second value is "0".

Alternatively, the first capability information indicates whether the UE supports the receiving of the first signal in the at least one frequency unit. In another optional indication manner, if the first capability information exists in the first message, or the first message includes the first capability information, it indicates that the UE supports the receiving of the first signal in the at least one frequency unit, or it indicates that the UE supports the receiving of the first signal in any frequency unit in the at least one frequency unit; or if the first capability information does not exist in the first message, or the first message does not include the first capability information, it indicates that the UE does not support the receiving of the first signal in the at least one frequency unit, or it indicates that the UE does not support the receiving of the first signal. For example, the first capability information occupies one indication field, and the indication field may occupy one or more bits. If the first message includes the indication field, it indicates "supported"; or if the first message does not include the indication field, it indicates "not supported".

In the foregoing two indication manners, the at least one frequency unit may include all the frequency units supported by the UE (in this case, if the first capability information indicates that the UE supports the receiving of the first signal in the at least one frequency unit, it indicates that the UE supports the receiving of the first signal in any frequency unit in all the frequency units supported by the UE; or if the first capability information indicates that the UE does not support the receiving of the first signal in the at least one frequency unit or does not support the receiving of the first signal, it indicates that the UE does not support the receiving of the first signal in all the frequency units supported by the UE). Alternatively, the at least one frequency unit may include all or a part of frequency units supported by the UE within the FR 1 (in this case, if the first capability information indicates that the UE supports the receiving of the first signal in the at least one frequency unit, it indicates that the UE supports the receiving of the first signal in any frequency unit in all the frequency units supported by the UE within the FR 1; or if the first capability information indicates that the UE does not support the receiving of the first signal in the at least one frequency unit or does not support the receiving of the first signal, it indicates that the UE does not support the receiving of the first signal in all the frequency units supported by the UE within the FR 1). Alternatively, the at least one frequency unit may include all or a part of frequency units supported by the UE within the FR 2 (in this case, if the first capability information indicates that the UE supports the receiving of the first signal in the at least one frequency unit, it indicates that the UE supports the receiving of the first signal in any frequency unit in all the frequency units supported by the UE within the FR 2; or if the first capability information indicates that the UE does not support the receiving of the first signal in the at least one frequency unit or does not support the receiving of the first signal, it indicates that the UE does not support the receiving of the first signal in all the frequency units supported by the UE within the FR 2). Alternatively, the first capability information may alternatively separately indicate whether the UE supports the receiving of the first signal within the FR 1, and indicate whether the UE supports the receiving of the first signal within the FR 2. For example, the first capability information indicates whether the UE supports the receiving of the first signal in the at least one frequency unit. In still another optional indication manner, the first capability information includes first sub-information and second sub-information, the first sub-information may indicate whether the UE supports the receiving of the first signal in M1 frequency units within a second frequency range, and the second sub-information may indicate whether the UE supports the receiving of the first signal in M2 frequency units within a third frequency range. Both M1 and M2 are positive integers. For example, the at least one frequency unit includes the M1 frequency units and the M2 frequency units. The M1 frequency units are all or a part of frequency units supported by the UE within the second frequency range, and the M2 frequency units are all or a part of frequency units supported by the UE within the third frequency range. Optionally, the second frequency range is, for example, the FR 1, and the third frequency range is, for example, the FR 2; or the second frequency range and the third frequency range may be frequency ranges obtained through division based on a frequency threshold other than 6 GHz.

For example, if a value of the first sub-information is the first value, it indicates that the UE supports the receiving of the first signal in all the M1 frequency units, or it indicates that the UE supports the receiving of the first signal in any frequency unit in the M1 frequency units; or if a value of the first sub-information is the second value or is not the first value, it indicates that the UE does not support the receiving of the first signal in the M1 frequency units, or it indicates that the UE does not support the receiving of the first signal within the FR 1. Alternatively, if the first message includes the first sub-information, or the first sub-information exists in the first message, it indicates that the UE supports the receiving of the first signal in all the M1 frequency units, or it indicates that the UE supports the receiving of the first signal in any frequency unit in the M1 frequency units; or if the first message does not include the first sub-information, or the first sub-information does not exist in the first message, it indicates that the UE does not support the receiving of the first signal in the M1 frequency units, or it indicates that the UE does not support the receiving of the first signal within the FR 1.

Similarly, if a value of the second sub-information is the first value, it indicates that the UE supports the receiving of the first signal in all the M2 frequency units, or it indicates that the UE supports the receiving of the first signal in any frequency unit in the M2 frequency units; or if a value of the second sub-information is the second value or is not the first value, it indicates that the UE does not support the receiving of the first signal in the M2 frequency units, or it indicates that the UE does not support the receiving of the first signal within the FR 2. Alternatively, if the first message includes the second sub-information, or the second sub-information exists in the first message, it indicates that the UE supports the receiving of the first signal in all the M2 frequency units, or it indicates that the UE supports the receiving of the first signal in any frequency unit in the M2 frequency units; or if the first message does not include the second sub-information, or the second sub-information does not exist in the first message, it indicates that the UE does not support the receiving of the first signal in the M2 frequency units, or it indicates that the UE does not support the receiving of the first signal within the FR 2.

Indication manners of the first sub-information and the second sub-information may be the same, where for example, both are indications performed based on values; or indication manners of the first sub-information and the second sub-information may be different, where for example, indication of the first sub-information is performed based on a value, and indication of the second sub-information is performed depending on whether the second sub-information exists.

2. Assumption 2: That the UE supports the receiving of the first signal may mean: The receiving of the first signal is supported in the part of the frequency units supported by the UE; or provided that the UE supports the receiving of the first signal in the part of the frequency units (or any frequency unit) supported by the UE, it is considered that the UE supports the receiving of the first signal. If the UE does not support the receiving of the first signal in any frequency unit (or all the frequency units) supported by the UE, it is considered that the UE does not support the receiving of the first signal. The part of the frequency units supported by the UE may be a part of frequency units within a specific frequency range (for example, the FR 1 or the FR 2) supported by the UE, or a part of frequency units within all frequency ranges supported by the UE. An example in which the frequency unit is a band is used. Provided that the UE supports the receiving of the first signal in a part of bands supported by the UE, it is considered that the UE supports the receiving of the first signal. For example, the UE supports three frequency units: frequency units 1, 2, and 3. Provided that the UE supports the receiving of the first signal in any one or more of the three frequency units, it is considered that the UE supports the receiving of the first signal, for example, the UE supports the receiving of the first signal in the frequency units 1 and 2; or if the UE does not support the receiving of the first signal in the three frequency units, it is considered that the UE does not support the receiving of the first signal. The three frequency units may be all frequency units within a specific frequency range supported by the UE, or all frequency units within all frequency ranges supported by the UE.

In this assumption, that the first capability information indicates whether the UE supports the receiving of the first signal in the at least one frequency unit may include one or more of the following: The first capability information includes a first list (list), and the first list includes an identifier of the at least one frequency unit, where the UE supports the receiving of the first signal in a frequency unit indicated by an identifier included in the first list, but does not support the receiving of the first signal in a frequency unit indicated by an identifier not included in the first list; or the first capability information includes at least one piece of first indication information, and the at least one piece of first indication information is included in capability information of the at least one frequency unit in the first message, where any one of the at least one piece of first indication information is referred to as, for example, first indication information A, and the first indication information A may indicate whether the UE supports the receiving of the first signal in a frequency unit corresponding to the first indication information A.

If the first capability information includes the first list, the first message indicates, based on the list, a status of supporting the receiving of the first signal by the UE. For an identifier included in the first list, the UE can support the receiving of the first signal in a frequency unit indicated by the identifier; and for an identifier not included in the first list, the UE does not support the receiving of the first signal in a frequency unit indicated by the identifier. The first access network device can determine, based on the first list, specific frequency units in which the UE supports the receiving of the first signal, and an indication manner is clear. Optionally, in this indication manner, for a frequency unit indicated by any identifier in the first list, regardless of a specific frequency unit combination or specific frequency unit combinations (for example, a specific band combination or specific band combinations) supported by the UE and to which the frequency unit belongs, the receiving of the first signal can be supported in the frequency unit within the frequency unit combination or the frequency unit combinations to which the frequency unit belongs. For example, the first list includes an identifier A, the identifier A indicates a frequency unit A, and the frequency unit A belongs to both a frequency unit combination A supported by the UE and a frequency unit combination B supported by the UE. When operating in the frequency unit combination A, the UE can support the receiving of the first signal in the frequency unit A in the frequency unit combination A. When operating in the frequency unit combination B, the UE can also support the receiving of the first signal in the frequency unit A in the frequency unit combination B.

If the first capability information includes the at least one piece of first indication information, the at least one piece of first indication information is in one-to-one correspondence with the at least one frequency unit. The first message may include at least one piece of capability information, and the at least one piece of capability information is capability information of the at least one frequency unit. For example, the frequency unit is a band, a band combination, or a band in a band combination. For example, the frequency unit is the band. For any piece of first indication information 1 in the at least one piece of first indication information, the first indication information 1 indicates a band 1. Regardless of a specific band combination or specific band combinations to which the band 1 belongs, the UE can support the receiving of the first signal in the band 1 in the band combination or the band combinations. For example, the first indication information 1 indicates the band 1, and the band 1 belongs to both a band combination 1 supported by the UE and a band combination 2 supported by the UE. When operating in the band combination 1, the UE can support the receiving of the first signal in the band 1 in the band combination 1. When operating in the band combination 2, the UE can also support the receiving of the first signal in the band 1 in the band combination 2.

For another example, the frequency unit is the band combination. For any piece of first indication information 1 in the at least one piece of first indication information, the first indication information 1 may indicate a band combination 1. In this case, the UE can support the receiving of the first signal in all bands included in the band combination 1. For example, the first indication information 1 indicates the band combination 1 supported by the UE, and the band combination 1 includes a band 1 and a band 2. When operating in the band 1 in the band combination 1, the UE can support the receiving of the first signal. When operating in the band 2 in the band combination 1, the UE can also support the receiving of the first signal.

For still another example, if the frequency unit is a frequency unit in a frequency unit combination, for example, the band in the band combination, the at least one piece of capability information may be capability information of the band included in capability information of the band combination. For example, if the UE supports a band combination 1, and the band combination 1 includes a band 1 and a band 2, the capability information of the UE may include capability information of the band combination 1, and the capability information of the band combination 1 further includes capability information of the band 1 and capability information of the band 2. If the UE supports the receiving of the first signal in the band 1 in the band combination 1, the at least one piece of capability information in this embodiment of this application may include the capability information of the band 1 in the capability information of the band combination 1. For example, the band combination 1 supported by the UE includes the band 1 and the band 2, the first indication information 1 indicates the band 1 in the band combination 1, and the at least one piece of first indication information does not indicate the band 2 in the band combination 1. In this case, when operating in the band 1 in the band combination 1, the UE can support the receiving of the first signal. In this case, when operating in the band 2 in the band combination 1, the UE does not support the receiving of the first signal.

Regardless of whether the frequency unit is the band, the band combination, or the band in the band combination, indication manners of the first indication information are similar. For example, for any piece of first indication information 1 in the at least one piece of first indication information, the first indication information 1 may occupy a 1-bit indication field. If a value of the indication field is the first value, it indicates that the UE supports the receiving of the first signal in a frequency unit indicated by the first indication information 1; or if a value of the indication field is the second value or is not the first value, it indicates that the UE does not support the receiving of the first signal in a frequency unit indicated by the first indication information 1. For example, the first value is "1", and the second value is "0". Alternatively, if the first indication information 1 exists in the first message, or the at least one piece of first indication information includes the first indication information 1, it indicates that the UE supports the receiving of the first signal in the frequency unit indicated by the first indication information; or if the first indication information 1 does not exist in the first message, or the at least one piece of first indication information does not include the first indication information 1, it indicates that the UE does not support the receiving of the first signal in the frequency unit indicated by the first indication information.

II. A dedicated frequency unit for the low-power radio is disposed for the UE, and may be referred to as a low-power frequency unit. In this manner, the at least one frequency unit may be at least one low-power frequency unit. The low-power frequency unit may be understood as a frequency unit in which the low-power radio can operate, or it may be understood as that the UE can operate in the low-power radio only in the low-power frequency unit. In this case, the UE may support two types of frequency units: the low-power frequency unit and an MR frequency unit. The MR frequency unit may be understood as a frequency unit in which an MR can operate, or it may be understood as that the UE can operate in the MR only in the MR frequency unit. Optionally, an index may be additionally set for the low-power frequency unit. One low-power frequency unit and one MR frequency unit may partially or completely overlap in frequency domain, or may have no intersection in frequency domain. For example, the UE supports three NR frequency units: a frequency unit 1 of 0 to 100 MHz, a frequency unit 2 of 100 MHz to 200 MHz, and a frequency unit 3 of 200 MHz to 300 MHz, and a frequency resource occupied by the frequency unit 2 in the three frequency units may be used as a low-power frequency unit, and is numbered as a low-power frequency unit 4. In this case, the UE supports three MR frequency units: a frequency unit 1, a frequency unit 2, and a frequency unit 3, and further supports a low-power frequency unit: the low-power frequency unit 4. It can be learned that the low-power frequency unit 4 completely overlaps the MR frequency unit 2 in frequency domain. For another example, a part of frequency resources occupied by the frequency unit 2 and a part of frequency resources occupied by the frequency unit 3 in the foregoing three frequency units may form a low-power frequency unit, which is numbered as a low-power frequency unit 4, and the low-power frequency unit 4 occupies 150 MHz to 250 MHz. In this case, the UE supports three MR frequency units: a frequency unit 1, a frequency unit 2, and a frequency unit 3, and further supports a low-power frequency unit: the low-power frequency unit 4. It can be learned that the low-power frequency unit 4 partially overlaps the MR frequency unit 2 and the MR frequency unit 3 in frequency domain. A bandwidth of the low-power frequency unit may be the same as or different from a bandwidth of the MR frequency unit, bandwidths of different MR frequency units may be the same or different, and bandwidths of different low-power frequency units may be the same or different.

3. Assumption 3: If supporting the receiving of the first signal, the UE is to support the receiving of the first signal in any low-power frequency unit supported by the UE, or is to support, in any low-power frequency unit supported by the UE, the receiving of the first signal within the low-power frequency unit. For example, the low-power frequency unit is a band, and is referred to as a low-power band. In this case, if supporting the receiving of the first signal, the UE is to support the receiving of the first signal in any low-power band supported by the UE, or support, in any low-power band supported by the UE, the receiving of the first signal in the low-power band. Any low-power frequency unit supported by the UE may be any low-power frequency unit within a specific frequency range (for example, the FR 1 or the FR 2) supported by the UE, or any low-power frequency unit within all frequency ranges supported by the UE. For example, the UE supports three low-power frequency units: low-power frequency units 1, 2, and 3. If supporting the receiving of the first signal, the UE is to support the receiving of the first signal in all the three low-power frequency units, that is, support the receiving of the first signal in any low-power frequency unit in the three low-power frequency units; or if the UE does not support the receiving of the first signal in any one of the three low-power frequency units, it is considered that the UE does not support the receiving of the first signal. The three low-power frequency units are all low-power frequency units within a specific frequency range supported by the UE, or are all low-power frequency units within all frequency ranges supported by the UE.

Optionally, the first capability information may alternatively indicate the at least one low-power frequency unit. For example, the first capability information includes an identifier of the at least one low-power frequency unit; or the UE may indicate the at least one low-power frequency unit to a first network device through another information; or the low-power frequency unit supported by the UE may be configured by a first network device or predefined in a protocol, so that the first network device can determine specific frequency units included in the at least one low-power frequency unit, without the indication of the UE.

In this assumption, the first capability information indicates whether the UE supports the receiving of the first signal in the at least one frequency unit. In an optional indication manner, if a value of the first capability information is a first value, it indicates that the UE supports the receiving of the first signal in the at least one low-power frequency unit, or it indicates that the UE supports the receiving of the first signal in any low-power frequency unit in the at least one low-power frequency unit; or if a value of the first capability information is a second value or is not a first value, it indicates that the UE does not support the receiving of the first signal in the at least one low-power frequency unit, or it indicates that the UE does not support the receiving of the first signal. Alternatively, the first capability information indicates whether the UE supports the receiving of the first signal in the at least one frequency unit. In another optional indication manner, if the first capability information exists in the first message, or the first message includes the first capability information, it indicates that the UE supports the receiving of the first signal in the at least one low-power frequency unit, or it indicates that the UE supports the receiving of the first signal in any low-power frequency unit in the at least one low-power frequency unit; or if the first capability information does not exist in the first message, or the first message does not include the first capability information, it indicates that the UE does not support the receiving of the first signal in the at least one low-power frequency unit, or it indicates that the UE does not support the receiving of the first signal. For more descriptions of this part of content, refer to the content corresponding to Assumption 1.

In the foregoing two indication manners, the at least one low-power frequency unit may include all the low-power frequency units supported by the UE (in this case, if the first capability information indicates that the UE supports the receiving of the first signal in the at least one frequency unit, it indicates that the UE supports the receiving of the first signal in any low-power frequency unit in all the low-power frequency units supported by the UE; or if the first capability information indicates that the UE does not support the receiving of the first signal in the at least one frequency unit or does not support the receiving of the first signal, it indicates that the UE does not support the receiving of the first signal in all the low-power frequency units supported by the UE); the at least one low-power frequency unit may include all or a part of low-power frequency units supported by the UE within the FR 1 (in this case, if the first capability information indicates that the UE supports the receiving of the first signal in the at least one frequency unit, it indicates that the UE supports the receiving of the first signal in any low-power frequency unit in all the low-power frequency units supported by the UE within the FR 1; or if the first capability information indicates that the UE does not support the receiving of the first signal in the at least one frequency unit or does not support the receiving of the first signal, it indicates that the UE does not support the receiving of the first signal in all the low-power frequency units supported by the UE within the FR 1); or the at least one low-power frequency unit may include all or a part of low-power frequency units supported by the UE within the FR 2 (in this case, if the first capability information indicates that the UE supports the receiving of the first signal in the at least one frequency unit, it indicates that the UE supports the receiving of the first signal in any frequency unit in all the low-power frequency units supported by the UE within the FR 2; or if the first capability information indicates that the UE does not support the receiving of the first signal in the at least one frequency unit or does not support the receiving of the first signal, it indicates that the UE does not support the receiving of the first signal in all the low-power frequency units supported by the UE within the FR 2). Alternatively, the first capability information may alternatively separately indicate whether the UE supports the receiving of the first signal within the FR 1, and indicate whether the UE supports the receiving of the first signal within the FR 2. For example, the first capability information indicates whether the UE supports the receiving of the first signal in the at least one frequency unit. In still another optional indication manner, the first capability information includes first sub-information and second sub-information, the first sub-information may indicate whether the UE supports the receiving of the first signal in M1 low-power frequency units within the FR 1, and the second sub-information may indicate whether the UE supports the receiving of the first signal in M2 low-power frequency units within the FR 2. Both M1 and M2 are positive integers. For example, the at least one low-power frequency unit includes the M1 low-power frequency units and the M2 low-power frequency units. The M1 frequency units are all or the part of the low-power frequency units supported by the UE within the FR 1, and the M2 frequency units are all or the part of the low-power frequency units supported by the UE within the FR 2.

For example, if a value of the first sub-information is the first value, it indicates that the UE supports the receiving of the first signal in all the M1 low-power frequency units, or it indicates that the UE supports the receiving of the first signal in any low-power frequency unit in the M1 low-power frequency units; or if a value of the first sub-information is the second value or is not the first value, it indicates that the UE does not support the receiving of the first signal in the M1 low-power frequency units, or it indicates that the UE does not support the receiving of the first signal within the FR 1. Alternatively, if the first message includes the first sub-information, or the first sub-information exists in the first message, it indicates that the UE supports the receiving of the first signal in all the M1 low-power frequency units, or it indicates that the UE supports the receiving of the first signal in any low-power frequency unit in the M1 low-power frequency units; or if the first message does not include the first sub-information, or the first sub-information does not exist in the first message, it indicates that the UE does not support the receiving of the first signal in the M1 low-power frequency units, or it indicates that the UE does not support the receiving of the first signal within the FR 1.

Similarly, if a value of the second sub-information is the first value, it indicates that the UE supports the receiving of the first signal in all the M2 low-power frequency units, or it indicates that the UE supports the receiving of the first signal in any low-power frequency unit in the M2 low-power frequency units; or if a value of the second sub-information is a second value or is not the first value, it indicates that the UE does not support the receiving of the first signal in the M2 low-power frequency units, or it indicates that the UE does not support the receiving of the first signal within the FR 2. Alternatively, if the first message includes the second sub-information, or the second sub-information exists in the first message, it indicates that the UE supports the receiving of the first signal in all the M2 low-power frequency units, or it indicates that the UE supports the receiving of the first signal in any low-power frequency unit in the M2 low-power frequency units; or if the first message does not include the second sub-information, or the second sub-information does not exist in the first message, it indicates that the UE does not support the receiving of the first signal in the M2 low-power frequency units, or it indicates that the UE does not support the receiving of the first signal within the FR 2.

Indication manners of the first sub-information and the second sub-information may be the same, where for example, both are indications performed based on values; or indication manners of the first sub-information and the second sub-information may be different, where for example, indication of the first sub-information is performed based on a value, and indication of the second sub-information is performed depending on whether the second sub-information exists.

4. Assumption 4: That the UE supports the receiving of the first signal may mean: The receiving of the first signal is supported in a part of low-power frequency units supported by the UE; or provided that the UE supports the receiving of the first signal in a part of low-power frequency units (or any low-power frequency unit) supported by the UE, it is considered that the UE supports the receiving of the first signal. If the UE does not support the receiving of the first signal in any low-power frequency unit supported by the UE, it is considered that the UE does not support the receiving of the first signal. An example in which the low-power frequency unit is a low-power band is used. Provided that the UE supports the receiving of the first signal in a part of low-power bands supported by the UE, it is considered that the UE supports the receiving of the first signal. The part of the low-power frequency units supported by the UE may be a part of low-power frequency units within a specific frequency range (for example, the FR 1 or the FR 2) supported by the UE, or a part of low-power frequency units within all frequency ranges supported by the UE. For example, the UE supports three low-power frequency units: low-power frequency units 1, 2, and 3. Provided that the UE supports the receiving of the first signal in any one or more of the three low-power frequency units, it is considered that the UE supports the receiving of the first signal, for example, the UE supports the receiving of the first signal in the low-power frequency units 1 and 2; or if the UE does not support the receiving of the first signal in the three low-power frequency units, it is considered that the UE does not support the receiving of the first signal. The three low-power frequency units may be all low-power frequency units within a specific frequency range supported by the UE, or are all low-power frequency units within all frequency ranges supported by the UE.

In this assumption, that the first capability information indicates whether the UE supports the receiving of the first signal in the at least one frequency unit may include one or more of the following: The first capability information includes a first list, and the first list includes an identifier of the at least one low-power frequency unit, where the UE supports the receiving of the first signal in a low-power frequency unit indicated by an identifier included in the first list, but does not support the receiving of the first signal in a frequency unit (including a low-power frequency unit and/or an MR frequency unit) indicated by an identifier not included in the first list; or the first capability information includes at least one piece of first indication information, and the at least one piece of first indication information is included in capability information of the at least one frequency unit in the first message, where any one of the at least one piece of first indication information is referred to as, for example, first indication information A, and the first indication information A may indicate whether the UE supports the receiving of the first signal in a frequency unit corresponding to the first indication information A.

If the first capability information includes the first list, the first message indicates, based on the list, a status of supporting the receiving of the first signal by the UE. For an identifier included in the first list, the UE can support the receiving of the first signal in a low-power frequency unit indicated by the identifier; and for an identifier not included in the first list, the UE does not support the receiving of the first signal in a frequency unit indicated by the identifier. The first access network device can determine, based on the first list, specific frequency units in which the UE supports the receiving of the first signal, and an indication manner is clear. Optionally, the first list may correspond to a frequency unit combination. The frequency unit combination may be a first-type frequency unit combination, and all frequency units included in the first-type frequency unit combination are MR frequency units. Therefore, the first-type frequency unit combination may also be referred to as an MR frequency unit combination. For example, each of a part or all of MR frequency unit combinations supported by the UE may correspond to one first list, and identifiers included in first lists corresponding to different MR frequency unit combinations may be partially the same, completely the same, or completely different. Alternatively, there may alternatively be no correspondence between the first list and an MR frequency unit combination.

If the first list corresponds to the MR frequency unit combination, for a first list A corresponding to an MR frequency unit combination A, a low-power frequency unit indicated by any identifier within the first list A can be combined with the MR frequency unit combination A. The MR frequency unit combination A may include one or more MR frequency units. For example, the first list A includes an identifier A, the identifier A indicates a low-power frequency unit A, the UE supports an MR frequency unit combination A and an MR frequency unit combination B, and there is no corresponding first list for the MR frequency unit combination B. In this case, the low-power frequency unit A can be combined with the MR frequency unit combination A, but cannot be combined with the MR frequency unit combination B. If a low-power frequency unit can be combined with an MR frequency unit combination, it indicates that the UE can switch from an MR frequency unit included in the MR frequency unit combination to the low-power frequency unit, or can switch from the low-power frequency unit to the MR frequency unit included in the MR frequency unit combination; or when operating in an MR frequency unit included in the MR frequency unit combination, the UE can measure the low-power frequency unit, or when operating in the low-power frequency unit, the UE can measure the MR frequency unit included in the MR frequency unit combination.

For example, the first message includes the following content (an example in which the MR frequency unit combination is an MR band combination is used, and the MR band combination includes MR bands; and an example in which a low-power frequency unit combination is low-power bands is also used):
MR BC list;
MR BC{A},
LP-WUS band list: band X, band Y, band Z;
MR BC{B},
LP-WUS band list: band X, band Y, band Z;
MR BC{A+B},
LP-WUS band list: band X, band Y.

The LP-WUS band list represents the first list, and there are respective corresponding first lists for the three MR band combinations supported by the UE. The low-power band X can be combined with an MR band combination 1 (including an MR band A), the low-power band Y can be combined with the MR band combination 1, and the low-power band Z can also be combined with the MR band combination 1. The low-power band X can be combined with an MR band combination 2 (including an MR band B), the low-power band Y can be combined with the MR band combination 2, and the low-power band Z can also be combined with the MR band combination 2. The low-power band X can be combined with an MR band combination 3 (including an MR band A and an MR band B), the low-power band Y can be combined with the MR band combination 3, but the low-power band Z cannot be combined with the MR band combination 3.

Alternatively, if there is no correspondence between the first list and the MR frequency unit combination, a low-power frequency unit indicated by any identifier within the first list can be combined with any MR frequency unit combination (for example, an MR band combination) supported by the UE. For example, if the first list includes an identifier A, the identifier A indicates a low-power frequency unit A, and the UE supports an MR frequency unit combination A and an MR frequency unit combination B, the low-power frequency unit A can be combined with the MR frequency unit combination A, or can be combined with the MR frequency unit combination B.

For example, the first message includes the following content (an example in which the MR frequency unit combination is an MR band combination is used, and the MR band combination includes MR bands; and an example in which a low-power frequency unit combination is low-power bands is also used):
LP-WUS band list: band X, band Y, band Z;
MR BC list: BC{A}, BC{B}, BC{A+B}, BC{A+C}.

The LP-WUS band list represents the first list, and the first list includes identifiers of the three low-power bands X, Y, and Z. The UE supports four MR band combinations, where one MR band combination includes an MR band A, another MR band combination includes an MR band B, still another MR band combination includes the MR band A and the MR band B, and yet another MR band combination includes the MR band A and an MR band C. In this case, the low-power band X can be separately combined with any one or more of the four MR band combinations, the low-power band Y can be separately combined with any one or more of the four MR band combinations, and the low-power band Z can also be combined with any one or more of the four MR band combinations.

If the first capability information includes the at least one piece of first indication information, the at least one piece of first indication information is in one-to-one correspondence with the at least one frequency unit. Optionally, the frequency unit is, for example, a band combination. For example, the first indication information is an index of the band combination, or the first indication information includes the index of the band combination and an index of a band included in the band combination. For example, the frequency unit combination mentioned above is the first-type frequency unit combination, or is referred to as the MR frequency unit combination, while the frequency unit combination herein may be understood as a second-type frequency unit combination. The first-type frequency unit combination may include an MR frequency unit but does not include a low-power frequency unit; and the second-type frequency unit combination may include a low-power frequency unit, or include a low-power frequency unit and an MR frequency unit. For example, one or more low-power frequency units may be added to the MR frequency unit combination supported by the UE, to form the second-type frequency unit combination. The first message may include at least one piece of capability information, and the at least one piece of capability information is capability information of the at least one frequency unit. For example, the frequency unit is a band combination. For any piece of first indication information 1 in the at least one piece of first indication information, the first indication information 1 indicates a band combination 1, the band combination 1 is a second-type band combination, and the band combination 1 may include one or more low-power bands, and includes one or more MR bands.

For example, the first message includes the following content:
BC list: BC{A+X}, BC{B+Y}, BC{A+B+X}, BC{A+C+Y}.

The BC list includes four pieces of first indication information, and the four pieces of first indication information indicate four second-type band combinations. One band combination 1 includes an MR band A and a low-power band X, another band combination 2 includes an MR band B and a low-power band Y, still another band combination 3 includes the MR band A, the MR band B, and the low-power band X, and yet another band combination 4 includes the MR band A, an MR band C, and the low-power band Y. For example, the band combination 1 may be considered as a band combination formed by adding the low-power band X to an MR band combination that includes the MR band A and that is supported by the UE. Another band combination may also be understood similarly.

In addition to the foregoing manner, the first capability information may further indicate, in another manner, whether the UE supports the receiving of the first signal in the at least one frequency unit. This is not limited.

Optionally, the first message may further include second capability information, and the second capability information may indicate the capability information of the UE in the RRC non-connected state. For example, when the first capability information indicates that the UE supports the receiving of the first signal in the at least one frequency unit, or the first capability information indicates that the UE in the RRC non-connected state supports the receiving of the first signal in the at least one frequency unit, the first message may further include the second capability information. If the first capability information indicates that the UE does not support the receiving of the first signal in the at least one frequency unit, or the first capability information indicates that the UE does not support the receiving of the first signal, or the first capability information indicates that the UE in the RRC non-connected state does not support the receiving of the first signal in the at least one frequency unit, or the first capability information indicates that the UE in the RRC non-connected state does not support the receiving of the first signal, the first message may not need to include the second capability information. The second capability information may include N1 pieces of bandwidth information and/or K1 pieces of delay information, or the second capability information may alternatively indicate another capability information that is of the UE in the RRC non-connected state and that is related to the low-power radio.

N1 is a positive integer, and the N1 pieces of bandwidth information may indicate a bandwidth of the at least one frequency unit. For example, the N1 pieces of bandwidth information indicate N1 bandwidths, and the N1 bandwidths may be the bandwidth of the at least one frequency unit. In the at least one frequency unit, bandwidths of different frequency units may be the same or different. An example in which the frequency unit is a band is used. A bandwidth of a band is, for example, 20 MHz, 5 MHz, or 1.4 MHz. Optionally, N1 is equal to a quantity of the at least one frequency unit, and the N1 bandwidths are in one-to-one correspondence with the at least one frequency unit. For example, the UE may report a corresponding bandwidth at a granularity of a frequency unit or a frequency unit in a frequency unit combination. In this reporting granularity, the frequency unit may be in one-to-one correspondence with the bandwidth. Alternatively, N1 may be less than a quantity of the at least one frequency unit, and a bandwidth of one or more of the at least one frequency unit may be one of the N1 bandwidths. For example, the UE may report a corresponding bandwidth at a granularity of the UE or a frequency unit combination supported by the UE. In this reporting granularity, the at least one frequency unit may correspond to one bandwidth (at the granularity of the UE); or one frequency unit combination corresponds to one bandwidth, and bandwidths of all frequency units in the frequency unit combination are all the bandwidth. For example, the UE supports a frequency unit combination 1 and a frequency unit combination 2, the frequency unit combination 1 includes a frequency unit 1 and a frequency unit 2, the frequency unit combination 2 includes a frequency unit 3, bandwidths of the frequency unit 1 and the frequency unit 2 are both a bandwidth 1, and a bandwidth of the frequency unit 3 is a bandwidth 2. If the UE reports a bandwidth at the granularity of the frequency unit combination, N1 may be equal to 2, and the N1 bandwidths are the bandwidth 1 and the bandwidth 2.

Optionally, the first capability information indicates whether the terminal device supports the receiving of the first signal in the at least one frequency unit. In an optional implementation, the first capability information may include N1 pieces of bandwidth information, to be specific, the N1 bandwidths are indicated, to implicitly indicate whether the UE supports the receiving of the first signal in the at least one frequency unit corresponding to the N1 bandwidths. If N1=0, or the first capability information does not include the N1 pieces of bandwidth information, or the first message does not include the first capability information, the UE does not support the receiving of the first signal; or if N1 is not equal to 0, or the first capability information includes the N1 pieces of bandwidth information, the UE is to support the receiving of the first signal in the at least one frequency unit. In this case, the first capability information may not necessarily be implemented in the foregoing manner. For example, the first capability information may include only the N1 pieces of bandwidth information, and the second capability information may alternatively not include the N1 pieces of bandwidth information.

K1 is a positive integer, and K1 delays may correspond to the at least one frequency unit. Each of the K1 delays may include one or more of the following: time required for the UE to switch from the MR to the low-power radio, time required for the UE to switch from the low-power radio to the MR, or time required for the UE to switch between the low-power radio and the MR. If a delay includes the time required for the UE to switch from the MR to the low-power radio, or includes the time required for the UE to switch from the low-power radio to the MR, it may be understood as that in addition to the time, the delay further indicates a switching direction (that is, from the MR to the low-power radio, or from the low-power radio to the MR); or if a delay includes the time required for the UE to switch between the low-power radio and the MR, it may be understood as that the delay indicates the time but does not indicate a switching direction. In this indication manner, regardless of whether the UE switches from the low-power radio to the MR or switches from the MR to the low-power radio in a frequency unit corresponding to the delay, the time indicated by the delay is used. A delay is, for example, 0 nanoseconds (ns), 35 microseconds (µs), 140 µs, or 210 µs. In this embodiment of this application, the dedicated frequency unit may not need to be deployed for the low-power radio. To be specific, both the MR and the low-power radio can be supported in a frequency unit, or the UE can operate in both the MR and the low-power radio in a frequency unit. In this case, any one of the K1 delays may include time required for the UE to switch from the MR to the low-power radio in a frequency unit, or include time required for the UE to switch from the low-power radio to the MR in a frequency unit, or include time required for the UE to switch between the low-power radio and the MR in a frequency unit. Alternatively, in this embodiment of this application, the frequency unit may be deployed for the low-power radio, and may be referred to as the low-power frequency unit, in contrast to the MR frequency unit. For this, refer to the foregoing related descriptions. In this case, any one of the K1 delays may include time required for the UE to switch from an MR of an MR frequency unit to a low-power radio of a low-power frequency unit, includes time required for the UE to switch from a low-power radio of a low-power frequency unit to an MR of an MR frequency unit, or includes time required for the UE to switch between a low-power radio of a low-power frequency unit and an MR of an MR frequency unit.

Optionally, the UE may report the delay at a granularity of a UE, a frequency unit, a frequency unit combination, or a frequency unit in a frequency unit combination. If the UE reports the delay at the granularity of the UE, all frequency units supported by the UE correspond to a same delay; if the UE reports the delay at the granularity of the frequency unit or the frequency unit in the frequency unit combination, the UE may separately report delays for different frequency units supported by the UE, and the delays corresponding to the different frequency units are the same or different; or if the UE reports the delay at the granularity of the frequency unit combination, the UE may separately report delays for different frequency unit combinations supported by the UE, and the delays corresponding to the different frequency unit combinations are the same or different. Alternatively, if the low-power frequency unit is configured for the UE, the UE may report the delay for each low-power frequency unit and an MR frequency unit corresponding to the low-power frequency unit. For example, according to the foregoing descriptions, if a low-power frequency unit can be combined with a frequency unit combination, there may be correspondences between the low-power frequency unit and all MR frequency units within the frequency unit combination. For example, if a second-type frequency unit combination supported by the UE includes an MR frequency unit A, an MR frequency unit B, and a low-power frequency unit X (or a low-power frequency unit X supported by the UE can be combined with an MR frequency unit combination 1, and the MR frequency unit combination 1 includes an MR frequency unit A and an MR frequency unit B), the UE may report a delay corresponding to a frequency unit combination {A, X}, and may report a delay corresponding to a frequency unit combination {B, X}. The delay corresponding to the frequency unit combination {A, X} may include time required for the UE to switch from an MR of the frequency unit A to a low-power radio of the frequency unit X, include time required for switching from a low-power radio of the frequency unit X to an MR of the frequency unit A, or include switching time between an MR of the frequency unit A and a low-power radio of the frequency unit X.

With reference to the foregoing descriptions, the second capability information is the capability information of the UE in the RRC non-connected state, and the first capability information also includes the capability information of the UE in the RRC non-connected state. It may be understood as that the capability information of the UE in the RRC non-connected state includes one or more of the following: information indicating whether the UE supports the receiving of the first signal in the at least one frequency unit, the N1 pieces of bandwidth information, or the K1 pieces of delay information.

The first message includes, for example, a first container (container), and the first container may be used to carry the paging-related information of the UE. The first container is, for example, UE radio paging information (UE radio paging information), or the first container may alternatively have another name. This is not limited in embodiments of this application. The following uses an example in which the first container is the UE radio paging information. Optionally, the first capability information and/or the second capability information included in the first message may not be included in the UE radio paging information. That is, the first message may include one piece of first capability information and/or one piece of second capability information, and the first capability information and/or the second capability information are/is included in the first message, but are/is not included in the UE radio paging information. Alternatively, the UE radio paging information in the first message may include the first capability information and/or the second capability information. In this case, optionally, the first message may include two pieces of first capability information and/or two pieces of second capability information, where one piece of first capability information and/or one piece of second capability information may be included in the UE radio paging information, and the other piece of first capability information and/or the other piece of second capability information may not be included in the UE radio paging information.

Optionally, the first message may further include third capability information, and the third capability information may indicate the capability information of the UE in the RRC connected state. For example, when the first capability information indicates that the UE supports the receiving of the first signal in the at least one frequency unit, or the first capability information indicates that the UE in the RRC connected state supports the receiving of the first signal in the at least one frequency unit, the first message may further include the third capability information. If the first capability information indicates that the UE does not support the receiving of the first signal in the at least one frequency unit, or the first capability information indicates that the UE does not support the receiving of the first signal, or the first capability information indicates that the UE in the RRC connected state does not support the receiving of the first signal in the at least one frequency unit, or the first capability information indicates that the UE in the RRC connected state does not support the receiving of the first signal, the first message may not need to include the third capability information. The third capability information may include one or more of the following: N2 pieces of bandwidth information, K2 pieces of delay information, time division multiplexing (time division multiplexing, TDM) information, or measurement gap (gap) information. Alternatively, the third capability information may further include another capability information that is of the UE in the RRC connected state and that is related to the low-power radio.

For descriptions of the N2 pieces of bandwidth information, refer to the foregoing descriptions of the N1 pieces of bandwidth information. For descriptions of the K2 pieces of delay information, refer to the foregoing descriptions of the K1 pieces of delay information.

The TDM information may indicate whether the UE operates in the MR and the low-power radio in a time division manner. For example, if a radio frequency capability of the UE can support the UE in simultaneously operating in the MR and the low-power radio, the UE may not need to use a TDM manner, but can simultaneously operate in the MR and the low-power radio; or if a radio frequency capability of the UE cannot support the UE in simultaneously operating in the MR and the low-power radio, the UE can operate in the MR and the low-power radio in a TDM manner. Optionally, the TDM information may indicate whether the UE performs receiving in the MR and the low-power radio in a time division manner. For example, if a radio frequency capability of the UE can support the UE in simultaneously performing receiving in the MR and the low-power radio, the UE may not need to use the TDM manner, but can simultaneously perform receiving in the MR and the low-power radio; or if a radio frequency capability of the UE cannot support the UE in simultaneously performing receiving in the MR and the low-power radio, the UE can perform receiving in the MR and the low-power radio in the TDM manner.

Optionally, the UE may report the TDM information at a granularity of a UE, a frequency unit, a frequency unit combination, or a frequency unit in a frequency unit combination. For example, one piece of TDM information may occupy a 1-bit indication field. If the indication field indicates that TDM is needed between the low-power radio and the MR, it indicates that the low-power radio and the MR cannot simultaneously operate. If the indication field indicates that no TDM is needed between the low-power radio and the MR, it indicates that the low-power radio and the MR can simultaneously operate.

Optionally, the third capability information may alternatively not include the TDM information, but may implicitly indicate, through delay information, whether the UE needs the TDM. For example, if a delay is 0, it indicates that no TDM is needed between the low-power radio and the MR that correspond to the delay. If a delay is greater than 0, it indicates that the TDM is needed between the low-power radio and the MR that correspond to the delay.

Measurement gap information may indicate whether the UE in the MR needs a measurement gap to perform measurement in the low-power radio, and/or indicate whether the UE in the low-power radio needs a measurement gap to perform measurement in the MR. For example, if a radio frequency capability of the UE can support the UE in simultaneously operating in the MR and the low-power radio, the UE operating in the MR may measure the low-power radio without frequency switching, and similarly, the UE operating in the low-power radio may measure the MR without the frequency switching. Therefore, the measurement gap does not need to be set. Alternatively, if a radio frequency capability of the UE cannot support the UE in simultaneously operating in the MR and the low-power radio, and the UE operating in the MR may need to measure the low-power radio, and/or the UE operating in the low-power radio may need to measure the MR, the UE may implement measurement by using the measurement gap.

Optionally, the UE may report the measurement gap information at a granularity of a UE, a frequency unit, a frequency unit combination, or a frequency unit in a frequency unit combination. For example, one piece of measurement gap information may occupy a 1-bit indication field. If the indication field indicates that the measurement gap is needed between the low-power radio and the MR, it indicates that the measurement gap needs to be configured for measuring the MR in the low-power radio and/or measuring the low-power radio in the MR. If the indication field indicates that no measurement gap is needed between the low-power radio and the MR, it indicates that the measurement gap does not need to be configured for measuring the MR in the low-power radio and/or measuring the low-power radio in the MR.

Optionally, the third capability information may alternatively not include the measurement gap information, but may implicitly indicate, through delay information, whether the UE needs the measurement gap. For example, if a delay is 0, it indicates that no measurement gap is needed between the low-power radio and the MR that correspond to the delay. If a delay is greater than 0, it indicates that the measurement gap is needed between the low-power radio and the MR that correspond to the delay.

With reference to the foregoing descriptions, the third capability information is the capability information of the UE in the RRC connected state, and the first capability information also includes the capability information of the UE in the RRC connected state. It may be understood as that the capability information of the UE in the RRC connected state includes one or more of the following: information indicating whether the UE supports the receiving of the first signal in the at least one frequency unit, the N2 pieces of bandwidth information, the K2 pieces of delay information, the TDM information, or the measurement gap information.

Optionally, the first message may include one or more of the first capability information, the second capability information, or the third capability information. The foregoing uses an example in which the UE sends the capability information of the UE in the RRC connected state and the capability information of the UE in the RRC non-connected state through one message (the first message). Alternatively, the UE may separately send the capability information of the UE in the RRC connected state and the capability information of the UE in the RRC non-connected state through different messages. For example, the first message includes a message A and a message B, and the message A includes the capability information of the UE in the RRC non-connected state, for example, includes the first capability information and/or the second capability information, where the first capability information indicates whether the UE in the RRC non-connected state supports the receiving of the first signal in the at least one frequency unit; and the message B includes the capability information of the UE in the RRC connected state, for example, includes the first capability information and/or the third capability information, where the first capability information indicates whether the UE in the RRC connected state supports the receiving of the first signal in the at least one frequency unit. The message A and the message B may be sent simultaneously, or may be sent at different time.

In addition to the foregoing capability information, the first message may further include other capability information of the UE, for example, include capability information of the UE in one or more radio access technologies (radio access technologies, RATs). This is not limited. The RAT includes, for example, new NR and/or an evolved universal mobile telecommunications system terrestrial radio access (evolved UMTS terrestrial radio access, E-UTRA) technology, or an E-UTRA-NR technology. Optionally, the first message is, for example, a UE capability information (UE capability information) message, or may be another message.

Optionally, before S301, the method may further include S302: The first access network device sends a request message. Correspondingly, the UE receives the request message from the first access network device. The request message may be for requesting a wireless access capability of the UE. After receiving the request message, the UE may send the first message to the first access network device. The request message is, for example, a UE capability enquiry (UE capability enquiry) message, or may be another message. For example, the request message may carry a RAT-type (type) indication, and the RAT-type indication may include a RAT corresponding to the capability that the first access network device requests the UE to report. The first capability information, the second capability information, the third capability information, and the like in embodiments of this application may be capability information corresponding to NR. Optionally, the request message may further carry filtering information, used to filter capabilities of the UE. The filtering information may also be understood as condition information, and the UE may send, to the first access network device, only capability information that meets the filtering information.

Optionally, before S301 or S302, the first access network device may further send system information (system information, SI), where the system information may indicate whether a cell in which the UE is located supports sending and/or configuration of the first signal. If the system information indicates that the cell supports the sending and/or configuration of the first signal, the system information may further indicate a related configuration of the first signal. If the cell supports the sending and/or configuration of the first signal, and the UE also supports the receiving of the first signal, the UE may receive the first signal via the low-power radio. When paging the UE, the first access network device may determine, based on capability information (for example, one or more of the first capability information, the second capability information, or the third capability information) that is of the UE and that is indicated by a paging message, whether to wake up the UE by using the first signal. For example, if the cell supports the sending and/or configuration of the first signal, and the UE also supports the receiving of the first signal, the first access network device may wake up the UE by using the first signal, and then page the UE. However, if the cell does not support the sending and/or configuration of the first signal and/or the UE does not support the receiving of the first signal, the first access network device may not wake up the UE by using the first signal, but wake up the UE by using another signal (for example, a WUS).

Optionally, after S301, the method may further include S303: The first access network device sends a second message to a core network device. Correspondingly, the core network device receives the second message from the first access network device. The core network device is, for example, an AMF, or may be another device. The second message may include fourth capability information of the UE. Optionally, if the UE radio paging information (the first container) in the first message includes the first capability information and/or the second capability information, the first access network device may add the UE radio paging information to the second message. In this case, the fourth capability information may include the first capability information and/or the second capability information in the UE radio paging information. Optionally, the fourth capability information is the UE radio paging information. Alternatively, if the first message includes the first capability information and/or the second capability information, but the first capability information and/or the second capability information are/is not included in the UE radio paging information in the first message, the first access network device may determine the fourth capability information based on the first capability information and/or the second capability information outside the UE radio paging information. For example, the first access network device may obtain the first capability information and/or the second capability information by parsing or deriving information outside the UE radio paging information in the first message, encode the obtained first capability information and/or second capability information, and add encoded first capability information and/or second capability information as the fourth capability information to the second message. Optionally, the second message is, for example, a UE radio paging information (UE radio paging information) message.

A manner of paging the UE includes core network (core network, CN) paging and RAN paging. For example, the CN paging may be used for the UE in the RRC idle state, and the RAN paging may be used for the UE in the RRC inactive state. For the CN paging, optionally, the method may further include S304, and S304 is performed, for example, after S303. S304 may include: The core network device sends a third message to the first access network device. Correspondingly, the first access network device receives the third message from the core network device. The third message may include information about a to-be-paged UE, for example, an identifier of the to-be-paged UE, and may include capability information of the to-be-paged UE. For example, if the to-be-paged UE includes the foregoing UE, the third message may include an identifier of the UE and the fourth capability information. If receiving the third message, the first access network device may determine a specific manner for paging the to-be-paged UE. For example, the third message includes the identifier of the UE and the fourth capability information. The first access network device may determine, based on the fourth capability information, whether the UE supports the receiving of the first signal in the at least one frequency unit, to determine a paging manner or a wake-up manner for the UE. Optionally, the method may further include S305: The first access network device sends the first signal, where the first signal may be used to wake up one or more UEs, and the one or more UEs include the foregoing UE. For example, the UE receives the first signal via the low-power radio, and the UE may receive a subsequent paging message based on the first signal. For example, after receiving the first signal, the low-power radio may wake up the MR of the UE. For example, if the UE supports the receiving of the first signal in the at least one frequency unit, and the cell in which the UE is located supports the sending and/or configuration of the first signal, S305 may be performed. Optionally, the method may further include S306, and S306 is performed, for example, after S305. In S306, the first access network device sends a first paging message, and the UE then receives the first paging message from the first access network device via the MR. The first paging message may be used to page at least one UE, the at least one UE includes the foregoing UE, and the UE woken up by using the first signal may be completely or partially the same as the UE paged by using the first paging message.

Alternatively, if the UE does not support the receiving of the first signal in the at least one frequency unit, and/or the cell in which the UE is located does not support the sending and/or configuration of the first signal, the first access network device may wake up the UE in another manner, for example, wake up the UE through a WUS. In this case, S305 may be replaced with the following step: The first access network device sends a WUS, where the WUS may be used to wake up one or more UEs, and the one or more UEs include the foregoing UE. For example, if the UE receives the WUS via the MR, the low-power radio may wake up the MR of the UE. In this case, the method may alternatively include S306: The first access network device sends a first paging message, and the UE receives the first paging message from the first access network device via the MR. The first paging message may be used to page at least one UE, the at least one UE includes the foregoing UE, and the UE woken up by using the WUS may be completely or partially the same as the UE paged by using the first paging message. For another example, if the first access network device may directly send a first paging message, S305 is not performed. In this case, the method may include S306: The first access network device sends a first paging message, and the UE receives the first paging message from the first access network device via the MR, where the first paging message may be used to page at least one UE, and the at least one UE includes the foregoing UE.

Optionally, the third message is, for example, a paging message. The paging message may include a paging-related UE radio capability for paging (UE radio capability for paging) field, and the fourth capability information may be included in the UE radio capability for paging field. Alternatively, the UE radio capability for paging field includes a second message (for example, a UE radio paging information (UE Radio Paging Information) message), and the second message includes the fourth capability information.

For the RAN paging, the method may alternatively include S304, and the third message may include the fourth capability information. For example, the core network device stores registration information of the one or more UEs, and the registration information of the UE may include capability information of the UE. In this case, the core network device may send all or some of the stored capability information of the UE to a corresponding access network device. In this case, the third message is, for example, core network assistance information for RRC inactive state (core network assistance information for RRC inactive). For example, the core network assistance information for RRC inactive includes UE radio capability for paging, and the fourth capability information may be included in UE radio capability for paging. For the RAN paging, a to-be-paged UE is determined by the access network device. For example, if receiving the fourth capability information, the first access network device may also determine, based on the fourth capability information, whether the UE supports the receiving of the first signal in the at least one frequency unit, to determine a paging manner or a wake-up manner for the UE. Optionally, the method may further include S305: The first access network device sends the first signal, where the first signal may be used to wake up one or more UEs, and the one or more UEs include the foregoing UE. For example, the UE receives the first signal via the low-power radio, and the UE may receive a subsequent paging message based on the first signal. For example, after receiving the first signal, the low-power radio may wake up the MR of the UE. For example, if the UE supports the receiving of the first signal in the at least one frequency unit, and the cell in which the UE is located supports the sending and/or configuration of the first signal, S305 may be performed. Optionally, the method may further include S306, and S306 is performed, for example, after S305. In S306, the first access network device sends a first paging message, and the UE then receives the first paging message from the first access network device via the MR. The first paging message may be used to page at least one UE, the at least one UE includes the foregoing UE, and the UE woken up by using the first signal may be completely or partially the same as the UE paged by using the first paging message.

Alternatively, if the UE does not support the receiving of the first signal in the at least one frequency unit, and/or the cell in which the UE is located does not support the sending and/or configuration of the first signal, the first access network device may wake up the UE in another manner, for example, wake up the UE through a WUS. In this case, S305 may be replaced with the following step: The first access network device sends a WUS, where the WUS may be used to wake up one or more UEs, and the one or more UEs include the foregoing UE. For example, if the UE receives the WUS via the MR, the low-power radio may wake up the MR of the UE. In this case, the method may alternatively include S306: The first access network device sends a first paging message, and the UE receives the first paging message from the first access network device via the MR. The first paging message may be used to page at least one UE, the at least one UE includes the foregoing UE, and the UE woken up by using the WUS may be completely or partially the same as the UE paged by using the first paging message. For another example, if the first access network device may directly send a first paging message, S305 is not performed. In this case, the method may include S306: The first access network device sends a first paging message, and the UE receives the first paging message from the first access network device via the MR, where the first paging message may be used to page at least one UE, and the at least one UE includes the foregoing UE.

Optionally, if the UE is not currently within coverage of the first access network device, for example, the first access network device is an anchor (anchor) access network device of the UE, but the UE has currently moved to coverage of another access network device, the first access network device may further send a fourth message to at least one access network device in addition to autonomously paging the UE. This step is performed, for example, after S304. The fourth message may include information about a to-be-paged UE, for example, an identifier of the to-be-paged UE, and include capability information of the to-be-paged UE. For example, if the to-be-paged UE includes the UE, the fourth message may include an identifier of the UE and the fourth capability information. The access network device that receives the fourth message may determine a paging manner or a wake-up manner for the UE based on the fourth capability information, to page the UE. For related content, refer to the foregoing descriptions.

Optionally, the fourth message is, for example, a paging message. The paging message may include a UE radio capability for paging field. The fourth capability information may be included in the UE radio capability for paging field. Alternatively, the UE radio capability for paging field includes a second message (for example, a UE radio paging information (UE Radio Paging Information) message), and the second message includes the fourth capability information.

Optionally, S303 to S306 are mainly described for a case in which the first capability information and/or the second capability information are/is the capability information of the UE in the RRC non-connected state.

The UE in this embodiment of this application may send the first capability information to the first access network device. The first capability information may indicate whether the UE supports the receiving of the first signal in the at least one frequency unit. The first signal is received by the UE via the low-power radio. That is, the first capability information is a capability that is of the UE and that is related to the low-power radio. It can be learned that in this embodiment of this application, the UE can notify the access network device of the capability that is of the UE and that is related to the low-power radio, so that the access network device can send a signal like an LP-WUS to the UE based on the capability, and the UE can operate via the low-power radio, to reduce power consumption of the UE. In addition, in hardware implementation, the UE may support the first signal only in some frequency units. Therefore, the first capability information may indicate whether the UE supports the receiving of the first signal in the at least one frequency unit, so that a granularity of capability reporting is finer. In this way, the access network device can perform normal configuration for the UE, or the access network device can communicate with the terminal device based on the capability of the UE.

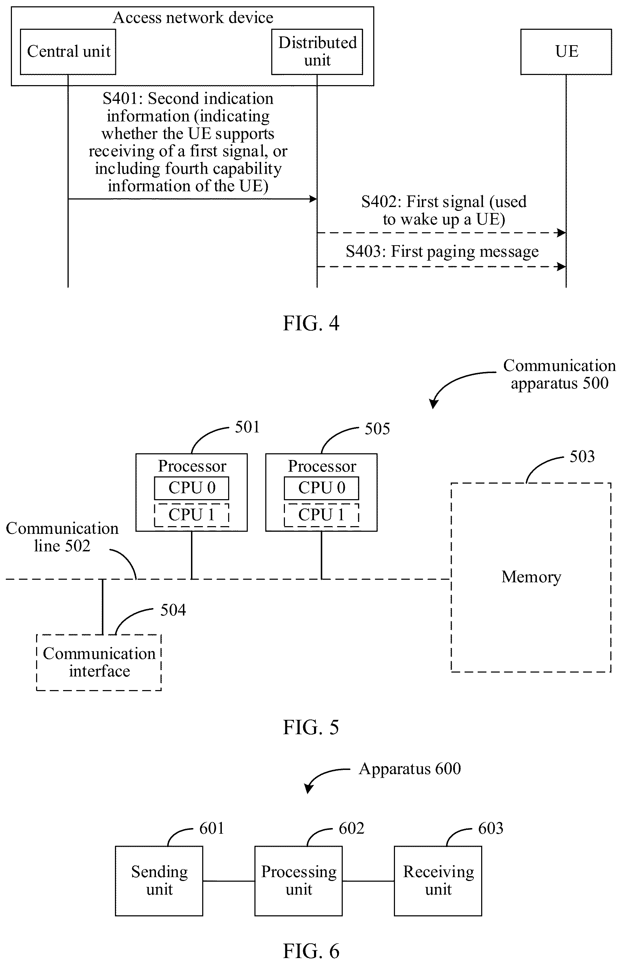

In the embodiment shown in FIG. 3, an example in which the access network device is of an overall architecture is used. The access network device may alternatively be implemented by using a CU-DU architecture. Therefore, an embodiment of this application provides another communication method, to describe how the access network device of the CU-DU architecture pages the UE. FIG. 4 is a flowchart of the method.

S401: A central unit (for example, a gNB-CU) of the access network device sends second indication information to a distributed unit (for example, a gNB-DU) of the access network device. Correspondingly, the distributed unit receives the second indication information from the central unit.

In a CU-DU architecture, the central unit receives a paging message from a core network device or another access network device, or receives capability information of the UE (for example, the fourth capability information in the embodiment shown in FIG. 3), and the distributed unit sends the paging message to the UE. Therefore, the distributed unit is also to learn of the fourth capability information, to determine a specific paging manner used for the UE. Optionally, the embodiment shown in FIG. 4 can be combined with the embodiment shown in FIG. 3. In this case, a first access network device in the embodiment shown in FIG. 4 and the first access network device in the embodiment shown in FIG. 3 may be a same device. In the steps performed by the first access network device in the embodiment shown in FIG. 3, the step of sending a first paging message by the first access network device may be performed by the distributed unit in this embodiment of this application, and all other steps performed by the first access network device may be performed by the central unit in this embodiment of this application. For example, S401 may be performed after S304. Alternatively, the access network device in the embodiment shown in FIG. 4 and any one of the at least one access network device in the embodiment shown in FIG. 3 may be a same device. Receiving, by the access network device, a fourth message from a first access network device may be performed by the central unit, and sending, by the access network device, a paging message used to page the UE may be performed by the distributed unit.

Alternatively, the embodiment shown in FIG. 4 and the embodiment shown in FIG. 3 cannot be combined, but are separately applied. In this case, before S401, the central unit may determine to page the UE. For example, the central unit receives, from the core network device, a paging message used to page the UE, or the central unit autonomously determines to page the UE (a RAN paging manner).

For example, the central unit obtains the fourth capability information of the UE, or obtains one or more of the first capability information, the second capability information, or the third capability information of the UE. For descriptions of the capability information, refer to the embodiment shown in FIG. 3. The central unit may determine, based on the obtained capability information, whether the UE supports receiving of a first signal, determine whether the UE supports the receiving of the first signal in at least one frequency unit, or determine a specific paging manner or wake-up manner (for example, the first signal is used for wake-up, another signal is used for wake-up, or the paging message is directly sent) that is to be used for the UE. In this case, the central unit may send second indication information to the distributed unit, where the second indication information may indicate information about a to-be-paged UE. For example, the to-be-paged UE includes the UE, and the information about the UE indicated by the second indication information may indicate whether the UE supports the receiving of the first signal (or whether the UE enables the first signal, or whether the UE uses the first signal), indicate whether the UE supports the receiving of the first signal in the at least one frequency unit, or indicate a paging manner or a wake-up manner used for the UE.

Optionally, the second indication information may be included in a second paging message, and the second paging message corresponds to a UE. For example, if two UEs need to be paged, two second paging messages need to be sent, respectively corresponding to the two to-be-paged UEs.

The second paging message may include a UE paging capability (UE paging capability) field. For example, the second indication information may be included in the UE paging capability field. In this case, the second indication information may indicate whether the UE supports the receiving of the first signal in the at least one frequency unit, or the second indication information includes the one or more of the first capability information, the second capability information, or the third capability information. For an indication manner of the second indication information, content related to the capability information, and the like, refer to the descriptions of the embodiment shown in FIG. 3. Optionally, the second indication information is, for example, a second message (for example, a UE radio paging information (UE radio paging information) message), and the second message is included in the UE paging capability field.

Alternatively, the second paging message may include a paging cell list (paging cell list), the paging cell list may include information about one or more cells, and the second indication information may be included in information about a cell in the paging cell list. For example, if the paging cell list includes information about a first cell, and the first cell is a cell on which the UE camps, the second indication information may be included in the information about the first cell. In this case, the second indication information may indicate whether the UE supports the receiving of the first signal when the UE is paged in the first cell. For example, the second indication information may occupy a 1-bit indication field. If a value of the indication field is a first value, it indicates "support", to be specific, it indicates that the receiving of the first signal is supported, or it indicates that the first signal is used for wake-up; or if a value of the indication field is a second value or is not a first value, it indicates "not supported", to be specific, it indicates that the receiving of the first signal is not supported. The first value is, for example, "1", and the second value is, for example, "0". Alternatively, if the indication field exists in the second paging message, it indicates "support", to be specific, it indicates that the receiving of the first signal is supported, or it indicates that the first signal is used for wake-up; or if the indication field does not exist in the second paging message, it indicates "not supported", to be specific, it indicates that the receiving of the first signal is not supported.

After receiving the second indication information, the distributed unit can directly determine whether the to-be-paged UE supports the receiving of the first signal, determine whether the UE supports the receiving of the first signal in the at least one frequency unit, or determine a specific paging manner or wake-up manner that is to be used for the UE. Therefore, the distributed unit may page the UE in the corresponding paging manner, or wake up the UE in the corresponding wake-up manner. Optionally, the method further includes S402: The distributed unit sends the first signal. For example, if the UE supports the receiving of the first signal, or supports the receiving of the first signal in the at least one frequency unit, or the second indication information indicates that the UE is paged or woken up by using the first signal, S402 may be performed. The first signal may be used to wake up one or more UEs, and the one or more UEs include the UE. For example, the UE receives the first signal via the low-power radio, and the UE may receive a subsequent paging message based on the first signal. For example, after receiving the first signal, the low-power radio may wake up the MR of the UE. Optionally, the method further includes S403, and S403 may be performed after S402. In S403, the distributed unit sends a first paging message, and the UE receives the first paging message from the distributed unit via the MR. The first paging message may be used to page at least one UE, the at least one UE includes the UE, and the UE woken up by using the first signal may be completely or partially the same as the UE paged by using the first paging message. Alternatively, if the UE does not support the receiving of the first signal, or does not support the receiving of the first signal in the at least one frequency unit, or the second indication information indicates that the UE is paged or woken up without using the first signal (or a WUS), the distributed unit may wake up the UE in another manner, for example, wake up the UE by directly sending the paging message. S402 may be replaced with the following step: The distributed unit sends a WUS, where the WUS may be used to wake up one or more UEs, and the one or more UEs include the UE. For example, if the UE receives the WUS via the MR, the low-power radio may wake up the MR of the UE. In this case, the method may alternatively include S403: The distributed unit sends a first paging message, and the UE receives the first paging message from the distributed unit via the MR. The first paging message may be used to page at least one UE, the at least one UE includes the UE, and the UE woken up by using the WUS may be completely or partially the same as the UE paged by using the first paging message. For another example, if the distributed unit may directly send a first paging message, S402 is not performed. In this case, the method may include S403: The distributed unit sends a first paging message, and the UE receives the first paging message from the distributed unit via the MR, where the first paging message may be used to page at least one UE, and the at least one UE includes the UE.

If this embodiment of this application is combined with the embodiment shown in FIG. 3, the step in which the first access network device sends the first signal or the WUS in the embodiment shown in FIG. 3 is specifically the step in which the distributed unit sends the first signal or the WUS in this embodiment of this application. The step in which the first access network device sends the first paging message in the embodiment shown in FIG. 3 is specifically the step in which the distributed unit sends the first paging message in this embodiment of this application.

Optionally, if the second indication information indicates whether the UE supports the receiving of the first signal in the at least one frequency unit, S401 may also be replaced with the following step: The central unit sends the information about the to-be-paged UE to the distributed unit. Correspondingly, the distributed unit receives the information about the to-be-paged UE from the central unit. The information about the to-be-paged UE includes, for example, capability information that is of the to-be-paged UE and that is related to a low-power radio. For example, if the to-be-paged UE includes the UE, the information about the to-be-paged UE may include the fourth capability information, or include the one or more of the first capability information, the second capability information, or the third capability information. It may be understood as that the second indication information indicates whether the UE supports the receiving of the first signal in the at least one frequency unit. In an indication manner, the second indication information includes the fourth capability information; or in another indication manner, the second indication information includes the one or more of the first capability information, the second capability information, or the third capability information.

In this manner, the distributed unit may determine, based on the received capability information, whether the to-be-paged UE supports the receiving of the first signal, or determine whether the to-be-paged UE supports the receiving of the first signal in the at least one frequency unit, to determine a paging manner or a wake-up manner that is to be used. For example, for the UE, the distributed unit may determine, based on the received capability information, whether the UE supports the receiving of the first signal, or determine whether the UE supports the receiving of the first signal in the at least one frequency unit, to page or wake up the UE in a corresponding manner. For a paging or wake-up process, refer to the foregoing descriptions.

The solutions in embodiments of this application may be applied to the access network device of the overall architecture, or may be applied to the access network device of the distributed architecture. An application scope is wide, and an implementation is flexible.

FIG. 5 is a diagram of a structure of a communication apparatus according to an embodiment of this application. The communication apparatus 500 may be the UE in the embodiment shown in FIG. 3 or FIG. 4 or a circuit system in the UE, and is configured to implement the method corresponding to the UE in the foregoing method embodiments. Alternatively, the communication apparatus 500 may be the first access network device in the embodiment shown in FIG. 3 or FIG. 4 or a circuit system in the first access network device, and is configured to implement the method corresponding to the first access network device in the foregoing method embodiments. Alternatively, the communication apparatus 500 may be the core network device in the embodiment shown in FIG. 3 or FIG. 4 or a circuit system in the core network device, and is configured to implement the method corresponding to the core network device in the foregoing method embodiments. For example, a circuit system is a chip system.

The communication apparatus 500 includes at least one processor 501. The processor 501 may be configured to perform internal processing of the apparatus, to implement a specific control processing function. Optionally, the processor 501 includes instructions. Optionally, the processor 501 may store data. Optionally, different processors may be independent devices, may be located at different physical locations, or may be located on different integrated circuits. Optionally, different processors may be integrated into one or more processors, for example, integrated into one or more integrated circuits.

Optionally, the communication apparatus 500 includes one or more memories 503, configured to store instructions. Optionally, the memory 503 may further store data. The processor and the memory may be separately disposed, or may be integrated together.

Optionally, the communication apparatus 500 includes a communication line 502 and at least one communication interface 504. The memory 503, the communication line 502, and the communication interface 504 are all optional, and therefore are represented by dashed lines in FIG. 5.

Optionally, the communication apparatus 500 may further include a transceiver and/or an antenna. The transceiver may be configured to: send information to another apparatus or receive information from another apparatus. The transceiver may be referred to as a transceiver device, a transceiver circuit, an input/output interface, or the like, and is configured to implement a transceiver function of the communication apparatus 500 through an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 501 may include a general-purpose central processing unit (central processing unit, CPU), a microprocessor, an application-specific integrated circuit (application-specific integrated circuit, ASIC), or one or more integrated circuits that are configured to control program execution in the solutions of this application.

The communication line 502 may include a path for information transmission between the foregoing components.

The communication interface 504 uses any apparatus like a transceiver, and is configured to communicate with another device or a communication network, for example, the Ethernet, a radio access network (radio access network, RAN), a wireless local area network (wireless local area network, WLAN), or a wired access network.

The memory 503 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to: carry or store expected program code in a form of instructions or a data structure and that can be accessed by a computer, but is not limited thereto. The memory 503 may exist independently, and is connected to the processor 501 through the communication line 502. Alternatively, the memory 503 and the processor 501 may be integrated together.

The memory 503 is configured to store computer-executable instructions for executing the solutions of this application, and the processor 501 controls the execution. The processor 501 is configured to execute the computer-executable instruction stored in the memory 503, to implement steps performed by the UE, the first access network device, or the core network device in the embodiment shown in FIG. 3 or FIG. 4.

Optionally, the computer-executable instructions in this embodiment of this application may also be referred to as application program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 505 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 5 is a chip, for example, a chip in the UE, a chip in the first access network device, or a chip in the core network device, the chip includes a processor 501 (and may further include a processor 505), a communication line 502, and a communication interface 504. Optionally, the apparatus may include a memory 503. Specifically, the communication interface 504 may be an input interface, a pin, a circuit, or the like. The memory 503 may be a register, a cache, or the like. The processor 501 and the processor 505 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, the division into the modules is an example, and is merely logical function division. During actual implementation, another division manner may be used. For example, when each functional module is obtained through division based on each corresponding function, FIG. 6 is a diagram of an apparatus. The apparatus 600 may be the UE, the first access network device, or the core network device in the foregoing method embodiments, or a chip in the UE, a chip in the first access network device, or a chip in the core network device. The apparatus 600 includes a sending unit 601, a processing unit 602, and a receiving unit 603.

It should be understood that the apparatus 600 may be configured to implement steps performed by the UE, the first access network device, or the core network device in the communication methods in embodiments of this application. For related features, refer to the embodiment shown in FIG. 3 or FIG. 4. Details are not described herein again.

Optionally, functions/implementation processes of the sending unit 601, the receiving unit 603, and the processing unit 602 in FIG. 6 may be implemented by the processor 501 in FIG. 5 by invoking the computer-executable instructions stored in the memory 503. Alternatively, functions/implementation processes of the processing unit 602 in FIG. 6 may be implemented by the processor 501 in FIG. 5 by invoking the computer-executable instructions stored in the memory 503, and functions/implementation processes of the sending unit 601 and the receiving unit 603 in FIG. 6 may be implemented by the communication interface 504 in FIG. 5.

Optionally, when the apparatus 600 is a chip or a circuit, functions/implementation processes of the sending unit 601 and the receiving unit 603 may alternatively be implemented by using a pin, a circuit, or the like.

This application further provides a computer-readable storage medium. The computer-readable storage medium stores a computer program or instructions. When the computer program or the instructions are run, the method performed by the UE, the first access network device, or the core network device in the foregoing method embodiments is implemented. In this way, the functions in the foregoing embodiments may be implemented in a form of a software functional unit and sold or used as an independent product. Based on such an understanding, the technical solutions of this application essentially, or the part making contributions, or a part of the technical solutions may be implemented in a form of a software product. The computer software product is stored in a storage medium, and includes several instructions for instructing a computer device (which may be a personal computer, a server, a network device, or the like) to perform all or a part of steps in the methods described in embodiments of this application. The storage medium includes any medium that can store program code, such as a USB flash drive, a removable hard disk drive, a ROM, a RAM, a magnetic disk, or an optical disc.

This application further provides a computer program product. The computer program product includes computer program code. When the computer program code is run on a computer, the computer is caused to perform the method performed by the UE, the first access network device, or the core network device in any one of the foregoing method embodiments.

An embodiment of this application further provides a processing apparatus, including a processor and an interface. The processor is configured to perform the method performed by the UE, the first access network device, or the core network device in any one of the foregoing method embodiments.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Various illustrative logic units and circuits described in embodiments of this application may implement or operate the described functions by a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps in the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk drive, a removable magnetic disk, a CD-ROM, or any other form of storage medium in the art. For example, the storage medium may connect to the processor, so that the processor can read information from the storage medium and write information to the storage medium. Optionally, the storage medium may alternatively be integrated into the processor. The processor and the storage medium may be disposed in an ASIC, and the ASIC may be disposed in a terminal device. Optionally, the processor and the storage medium may be alternatively disposed in different components of the terminal device.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or there is a logic conflict, terms and/or descriptions in different embodiments are consistent and may be mutually referenced, and technical features in different embodiments can be combined based on an internal logical relationship thereof, to form a new embodiment.

It may be understood that in embodiments of this application, the UE, the first access network device, and/or the core network device may perform some or all steps in embodiments of this application. The steps or operations are merely examples. In embodiments of this application, other operations or variations of various operations may be further included. In addition, the steps may be performed in a sequence different from a sequence presented in embodiments of this application, and not all the operations in embodiments of this application may be necessarily performed.

## Claims

1. A communication method, applied to a terminal device, wherein the terminal device comprises a low-power module, and the method comprises:
sending a first message to a first network device, wherein the first message comprises first capability information, the first capability information indicates whether the terminal device supports receiving of a first signal in at least one frequency unit, and the low-power module is configured to receive the first signal.

2. The method according to claim 1, wherein the terminal device further comprises a main module, wherein
when the first capability information indicates that the terminal device supports the receiving of the first signal in the at least one frequency unit, the first message further comprises second capability information, and the second capability information comprises:
N1 pieces of bandwidth information, wherein the N1 pieces of bandwidth information indicate a bandwidth of the at least one frequency unit, and N1 is a positive integer; and/or
K1 pieces of delay information, wherein the K1 pieces of delay information correspond to the at least one frequency unit, K1 is a positive integer, and each of the K1 pieces of delay information indicates one or more of the following:
time required for the terminal device to switch from the main module to the low-power module; or
time required for the terminal device to switch from the low-power module to the main module; or
time required for the terminal device to switch between the low-power module and the main module.

3. The method according to claim 1 or 2, wherein the first message comprises a first container, and the first container is used to carry paging-related information of the terminal device, wherein
the first container comprises the first capability information and/or the second capability information; or
the first capability information is not comprised in the first container; or
the first message further comprises the second capability information, and the first capability information and the second capability information are not comprised in the first container.

4. The method according to claim 2 or 3, wherein
that the first capability information indicates whether the terminal device supports the receiving of the first signal in the at least one frequency unit comprises: the first capability information indicates whether the terminal device in a radio resource control RRC non-connected state supports the receiving of the first signal in the at least one frequency unit; and
the second capability information indicates capability information of the terminal device in the RRC non-connected state.

5. The method according to any one of claims 1 to 4, wherein the terminal device further comprises the main module, wherein
when the first capability information indicates that the terminal device supports the receiving of the first signal in the at least one frequency unit, the first message further comprises third capability information, and the third capability information comprises one or more of the following:
N2 pieces of bandwidth information, wherein the N2 pieces of bandwidth information indicate a bandwidth of the at least one frequency unit, and N2 is a positive integer;
K2 pieces of delay information, wherein the K2 pieces of delay information correspond to the at least one frequency unit, K2 is a positive integer, and each of the K2 pieces of delay information indicates one or more of the following: time required for the terminal device to switch from the main module to the low-power module, time required for the terminal device to switch from the low-power module to the main module, or time required for the terminal device to switch between the low-power module and the main module;
time division multiplexing information, wherein the time division multiplexing information indicates whether the terminal device operates in the main module and the low-power module in a time division manner; or
measurement gap information, wherein the measurement gap information indicates whether the terminal device in the main module needs a measurement gap to perform measurement in the low-power module, and/or whether the terminal device in the low-power module needs a measurement gap to perform measurement in the main module.

6. The method according to claim 5, wherein
that the first capability information indicates whether the terminal device supports the receiving of the first signal in the at least one frequency unit comprises: the first capability information indicates whether the terminal device in an RRC connected state supports the receiving of the first signal in the at least one frequency unit; and
the third capability information indicates capability information of the terminal device in the RRC connected state.

7. The method according to any one of claims 1 to 6, wherein that the first capability information indicates whether the terminal device supports the receiving of the first signal in the at least one frequency unit comprises:
when a value of the first capability information is a first value, it indicates that the terminal device supports the receiving of the first signal in the at least one frequency unit; or
when the first capability information exists, it indicates that the terminal device supports the receiving of the first signal in the at least one frequency unit, wherein
the at least one frequency unit comprises all frequency units supported by the terminal device, or comprises all frequency units supported by the terminal device within a first frequency range.

8. The method according to any one of claims 1 to 6, wherein the first capability information comprises first sub-information and second sub-information, and that the first capability information indicates whether the terminal device supports the receiving of the first signal in the at least one frequency unit comprises:
when a value of the first sub-information is a first value or the first sub-information exists, it indicates that the terminal device supports the receiving of the first signal in all M1 frequency units within a second frequency range; and
when a value of the second sub-information is the first value or the second sub-information exists, it indicates that the terminal device supports the receiving of the first signal in all M2 frequency units within a third frequency range, wherein
the at least one frequency unit comprises the M1 frequency units and the M2 frequency units, the M1 frequency units comprise all frequency units supported by the terminal device within the second frequency range, and the M2 frequency units comprise all frequency units supported by the terminal device within the third frequency range.

9. The method according to any one of claims 1 to 6, wherein that the first capability information indicates whether the terminal device supports the receiving of the first signal in the at least one frequency unit comprises one or more of the following:
the first capability information comprises a first list, and the first list comprises an identifier of the at least one frequency unit, wherein the terminal device supports the receiving of the first signal in a frequency unit indicated by an identifier comprised in the first list; or
the first capability information comprises at least one piece of first indication information, the at least one piece of first indication information is comprised in capability information of the at least one frequency unit in the first message, and one piece of first indication information of the at least one piece of first indication information indicates whether the terminal device supports the receiving of the first signal in a frequency unit corresponding to the piece of first indication information.

10. The method according to any one of claims 1 to 9, wherein the frequency unit comprises one or more of the following: a band, a band combination, or a band in a band combination.

11. The method according to any one of claims 1 to 10, wherein the frequency unit is a frequency unit in which the main module operates, or a frequency unit in which the low-power module operates.

12. The method according to any one of claims 1 to 11, wherein the terminal device further comprises the main module, and the method further comprises:
receiving the first signal from the first network device; and
receiving a first paging message based on the first signal, wherein the main module is configured to receive the first paging message.

13. A communication method, applied to a first network device, wherein the method comprises:
receiving a first message from a terminal device, wherein the first message comprises first capability information, the first capability information indicates whether the terminal device supports receiving of a first signal in at least one frequency unit, the terminal device comprises a low-power module, and the low-power module is configured to receive the first signal.

14. The method according to claim 13, wherein the terminal device further comprises a main module, wherein
when the first capability information indicates that the terminal device supports the receiving of the first signal in the at least one frequency unit, the first message further comprises second capability information, and the second capability information comprises:
N1 pieces of bandwidth information, wherein the N1 pieces of bandwidth information indicate a bandwidth of the at least one frequency unit, and N1 is a positive integer; and/or
K1 pieces of delay information, wherein the K1 pieces of delay information correspond to the at least one frequency unit, K1 is a positive integer, and each of the K1 pieces of delay information indicates one or more of the following:
time required for the terminal device to switch from the main module to the low-power module; or
time required for the terminal device to switch from the low-power module to the main module; or
time required for the terminal device to switch between the low-power module and the main module.

15. The method according to claim 13 or 14, wherein the first message comprises a first container, and the first container is used to carry paging-related information of the terminal device, wherein
the first container comprises the first capability information and/or the second capability information; or
the first capability information is not comprised in the first container; or
the first message further comprises the second capability information, and the first capability information and the second capability information are not comprised in the first container.

16. The method according to claim 14 or 15, wherein
that the first capability information indicates whether the terminal device supports the receiving of the first signal in the at least one frequency unit comprises: the first capability information indicates whether the terminal device in an RRC non-connected state supports the receiving of the first signal in the at least one frequency unit; and
the second capability information indicates capability information of the terminal device in the RRC non-connected state.

17. The method according to claim 15 or 16, wherein the first network device is a first access network device, and the method further comprises:
sending a second message to a core network device, wherein the second message comprises fourth capability information of the terminal device, wherein
when the first container comprises the first capability information and/or the second capability information, the second message comprises the first container, and the fourth capability information comprises the first capability information and/or the second capability information in the first container; or
when the first capability information is not comprised in the first container, the fourth capability information is determined based on the first capability information; or
when the first capability information and the second capability information are not comprised in the first container, the fourth capability information is determined based on the first capability information and the second capability information.

18. The method according to claim 17, wherein the method further comprises:
receiving a third message from the core network device, wherein the third message comprises the fourth capability information;
sending the first signal, wherein the first signal is a wake-up signal determined based on the fourth capability information; and
sending a first paging message for paging the terminal device.

19. The method according to claim 18, wherein the method further comprises:
sending a fourth message to at least one access network device, wherein the fourth message comprises the fourth capability information.

20. The method according to claim 18 or 19, wherein the first network device comprises a central unit and a distributed unit, and the method further comprises:
sending, by the central unit, second indication information to the distributed unit, wherein the second indication information indicates whether the terminal device supports the receiving of the first signal; or
sending, by the central unit, second indication information to the distributed unit, wherein the second indication information indicates whether the terminal device supports the receiving of the first signal in the at least one frequency unit.

21. The method according to claim 20, wherein that the second indication information indicates whether the terminal device supports the receiving of the first signal in the at least one frequency unit comprises:
the second indication information comprises the fourth capability information.

22. The method according to claim 20 or 21, wherein the second indication information is comprised in a second paging message, wherein
the second paging message comprises a UE paging capability field corresponding to the terminal device, and the second indication information is comprised in the UE paging capability field; or
the second paging message comprises a paging message list, the paging message list comprises information about a first cell on which the terminal device camps, and the second indication information is comprised in the information about the first cell.

23. The method according to any one of claims 13 to 22, wherein the terminal device further comprises the main module, wherein
when the first capability information indicates that the terminal device supports the receiving of the first signal in the at least one frequency unit, the first message further comprises third capability information, and the third capability information comprises one or more of the following:
N2 pieces of bandwidth information, wherein the N2 pieces of bandwidth information indicate a bandwidth of the at least one frequency unit, and N2 is a positive integer;
K2 pieces of delay information, wherein the K2 pieces of delay information correspond to the at least one frequency unit, K2 is a positive integer, and each of the K2 pieces of delay information indicates one or more of the following: time required for the terminal device to switch from the main module to the low-power module, time required for the terminal device to switch from the low-power module to the main module, or time required for the terminal device to switch between the low-power module and the main module;
time division multiplexing information, wherein the time division multiplexing information indicates whether the terminal device operates in the main module and the low-power module in a time division manner; or
measurement gap information, wherein the measurement gap information indicates whether the terminal device in the main module needs a measurement gap to perform measurement in the low-power module, and/or whether the terminal device in the low-power module needs a measurement gap to perform measurement in the main module.

24. The method according to claim 23, wherein
that the first capability information indicates whether the terminal device supports the receiving of the first signal in the at least one frequency unit comprises: the first capability information indicates whether the terminal device in an RRC connected state supports the receiving of the first signal in the at least one frequency unit; and
the third capability information indicates capability information of the terminal device in the RRC connected state.

25. The method according to any one of claims 13 to 24, wherein that the first capability information indicates whether the terminal device supports the receiving of the first signal in the at least one frequency unit comprises:
when a value of the first capability information is a first value, it indicates that the terminal device supports the receiving of the first signal in the at least one frequency unit; or
when the first capability information exists, it indicates that the terminal device supports the receiving of the first signal in the at least one frequency unit, wherein
the at least one frequency unit comprises all frequency units supported by the terminal device, or comprises all frequency units supported by the terminal device within a first frequency range.

26. The method according to any one of claims 13 to 24, wherein the second capability information comprises first sub-information and second sub-information, and that the first capability information indicates whether the terminal device supports the receiving of the first signal in the at least one frequency unit comprises:
when a value of the first sub-information is a first value or the first sub-information exists, it indicates that the terminal device supports the receiving of the first signal in all M1 frequency units within a second frequency range; and
when a value of the second sub-information is the first value or the second sub-information exists, it indicates that the terminal device supports the receiving of the first signal in all M2 frequency units within a third frequency range, wherein
the at least one frequency unit comprises the M1 frequency units and the M2 frequency units, the M1 frequency units comprise all frequency units supported by the terminal device within the second frequency range, and the M2 frequency units comprise all frequency units supported by the terminal device within the third frequency range.

27. The method according to any one of claims 13 to 24, wherein that the first capability information indicates whether the terminal device supports the receiving of the first signal in the at least one frequency unit comprises one or more of the following:
the first capability information comprises a first list, and the first list comprises an identifier of the at least one frequency unit, wherein the terminal device supports the receiving of the first signal in a frequency unit indicated by an identifier comprised in the first list; or
the first capability information comprises at least one piece of first indication information, the at least one piece of first indication information is comprised in capability information of the at least one frequency unit in the first message, and one piece of first indication information of the at least one piece of first indication information indicates whether the terminal device supports the receiving of the first signal in a frequency unit corresponding to the piece of first indication information.

28. The method according to any one of claims 13 to 27, wherein the frequency unit comprises one or more of the following: a band, a band combination, or a band in a band combination.

29. The method according to any one of claims 13 to 28, wherein the frequency unit is a frequency unit in which the main module operates, or a frequency unit in which the low-power module operates.

30. A communication apparatus, wherein the communication apparatus comprises a processing unit and a transceiver unit, and the processing unit is coupled to the transceiver unit, to perform the method according to any one of claims 1 to 12, or perform the method according to any one of claims 13 to 29.

31. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 12, or to cause the communication apparatus to perform the method according to any one of claims 13 to 29.

32. A computer-readable storage medium, wherein the computer-readable storage medium is configured to store a computer program; and when the computer program runs on a computer, the computer is caused to perform the method according to any one of claims 1 to 12, or the computer is caused to perform the method according to any one of claims 13 to 29.

33. A computer program product, wherein the computer program product comprises a computer program; and when the computer program runs on a computer, the computer is caused to perform the method according to any one of claims 1 to 12, or the computer is caused to perform the method according to any one of claims 13 to 29.

34. A chip system, wherein the chip system comprises:
a processor and an interface, wherein the processor is configured to: invoke instructions from the interface and run the instructions; and when the processor executes the instructions, the method according to any one of claims 1 to 12 or the method according to any one of claims 13 to 29 is implemented.

35. A communication system, wherein the communication system comprises a terminal device and a first network device, wherein
the terminal device is configured to perform the method according to any one of claims 1 to 12; and
the first network device is configured to perform the method according to any one of claims 13 to 29.
